# EUROPEAN PATENT APPLICATION

(11) **EP 4 365 227 A1**
(43) Date of publication of application: **08.05.2024**
(21) Application number: 22833291.2
(22) Date of filing: 30.06.2022
(51) Int. Cl.: C08L 1/02, B29C 70/12, C08B 11/02, C08B 11/08, C08B 11/12, C08B 30/00, C08B 37/00, C08B 37/08, C08L 3/02, D01F 2/28

(54) **POLYSACCHARIDE NANOFIBER-BLENDED POLYSACCHARIDE COMPOSITION PRODUCTION METHOD**

(30) Priority: 01.07.2021 JP 2021110253
(71) Applicant: National University Corporation Kanazawa University, Ishikawa 920-1192 (JP); Kusano Sakko Inc., Ebetsu-shi, Hokkaido 067-0063 (JP); MP Gokyo Food & Chemical Co., Ltd., Osaka-shi, Osaka 530-0001 (JP)
(72) Inventor: FUJIE, Tetsuo, Kanazawa-shi, Ishikawa 920-1192 (JP); WADA, Naoki, Kanazawa-shi, Ishikawa 920-1192 (JP); TAKAHASHI, Kenji, Kanazawa-shi, Ishikawa 920-1192 (JP); MATSUSHIMA, Tokuo, Ebetsu-shi, Hokkaido 067-0063 (JP); UTSUNOMIYA, Shinji, Suita-shi, Osaka 5640053 (JP)
(74) Representative: Hoffmann Eitle
(86) International application number: PCT/JP2022/026299
(87) International publication number: WO 2023/277145

(57) **Abstract**

An object of the present disclosure is to provide a method for producing a polysaccharide nanofiber-blended polysaccharide composition which is capable of obtaining a polysaccharide nanofiber-blended polysaccharide composition whose mechanical physical properties are reinforced by a polysaccharide nanofiber, and is easily carried out. An aspect of the present embodiment is a method for producing a polysaccharide nanofiber-blended polysaccharide composition comprising a step of mixing a sol comprising a polysaccharide nanofiber (A), a polysaccharide (B), and a solvent (C) capable of dissolving the polysaccharide (B) to obtain a mixture, and a step of drying the mixture to obtain a dry mixture.

## Description

### Technical Field

The present disclosure relates to a method for producing a polysaccharide nanofiber-blended polysaccharide composition.

### Background Art

For improving physical properties of resins, fibers such as glass fibers and carbon fibers and resins have been conventionally composited to obtain fiber reinforced resins, and various studies have been conducted.

Already proposed examples of the fiber to be composited with resins include polysaccharide nanofibers such as cellulose nanofibers, chitosan nanofibers, chitin nanofibers (e.g., see Patent Literature 1).

For example, cellulose nanofibers (CNF) are known to have a large specific surface area and excellent reinforcing effect. Meanwhile, polysaccharide nanofibers have a hydroxyl group, that is a hydrophilic group, on the surface thereof, and the presence of an ester group or an ether group with a modified hydroxyl group improves hydrophobicity and further increases steric bulkiness, whereby aggregation is known to be prevented; however, a problem has been that an unmodified hydroxyl group is likely to aggregate by hydrogen bonding.

Patent Literature 1 proposes to obtain a dispersion comprising a polysaccharide nanofiber, a dispersion medium and a monomer that is pre-stage of a resin, and then polymerize the monomer for homogeneously dispersing the polysaccharide nanofiber in the resin.

Additionally, as another technique, a proposal has been made on a resin composition comprising a modified cellulose nanofiber (A) in which a part of the hydroxyl group of the cellulose nanofiber is modified with a substituent having a carboxyl group, and a resin (B) (e.g., see Patent Literature 2). Patent Literature 2 disclosed that N-methyl-2-pyrrolidone (NMP) is added to an acetone slurry of cellulose nanofiber (CNF), and CNF is dispersed in NMP to obtain the modified cellulose nanofiber (A), which is then reacted to a polybasic acid anhydride, followed by purification multiple times. Patent Literature 2 also discloses the reaction of the epoxy group, hydroxyl group, amino group and the like of the resin (B) to the carboxyl group of the modified cellulose (A), but the technique described in Patent Literature 2 involves an extremely large number of steps, thereby causing this method to be cumbersome.

### Citation List

### Patent Literature

Patent Literature 1: JP Patent Publication No. 2016-153470
Patent Literature 2: JP Patent Publication No. 2012-229350

### Summary of Invention

### Technical Problem

Various studies have been made on homogeneous dispersion of a polysaccharide nanofiber in a resin. However, conventionally proposed methods do not always well achieve dispersion in a resin due to aggregation of the polysaccharide nanofiber and may fail to sufficiently improve physical properties. Additionally, the conventionally proposed another method achieves dispersion in a resin but needs complicated steps, due to which improvement is often demanded in light of extra efforts and costs.

The present inventors studied on a method capable of easily dispersing a polysaccharide nanofiber in the various lights such as the kind of a resin (base material) that is the subject in which a polysaccharide nanofiber is dispersed, and dispersion methods, and conceived that a polysaccharide nanofiber can be easily dispersed in a base material when the base material is a polysaccharide having the similar molecular structure and repeating unit structure to the polysaccharide nanofiber, and a specific dispersion method is employed.

In other words, an object of the present disclosure is to provide a method for producing a polysaccharide nanofiber-blended polysaccharide composition which is capable of obtaining a polysaccharide nanofiber-blended polysaccharide composition whose mechanical physical properties are reinforced by a polysaccharide nanofiber, and can be easily carried out.

### Solution to Problem

The present inventors conducted extensive studies to solve the above problem and found that the polysaccharide nanofiber-blended polysaccharide composition produced by a specific method has reinforced mechanical physical properties, and such a method can be easily carried out, whereby the present disclosure has been accomplished.

Aspect examples of the present embodiment are described as follows.
(1) A method for producing a polysaccharide nanofiber-blended polysaccharide composition, comprising:
   a step of mixing
      a sol comprising a polysaccharide nanofiber (A),
      a polysaccharide (B), and
      a solvent (C) capable of dissolving the polysaccharide (B) to obtain a mixture, and
   a step of drying the mixture to obtain a dry mixture.
(2) The method for producing a polysaccharide nanofiber-blended polysaccharide composition according to (1), wherein the polysaccharide nanofiber (A) is at least one polysaccharide nanofiber selected from the group consisting of bacterial cellulose nanofibers, plant-based cellulose nanofibers, chitosan nanofibers, and chitin nanofibers.
(3) The method for producing a polysaccharide nanofiber-blended polysaccharide composition according to (1) or (2), wherein the polysaccharide (B) is at least one polysaccharide selected from the group consisting of cellulose derivatives, chitosan, chitin, starch, starch derivatives, tamarind gum, xanthan gum, guar gum, guar gum derivatives, and gellan gum.
(4) The method for producing a polysaccharide nanofiber-blended polysaccharide composition according to any one of (1) to (3), wherein the solvent (C) is at least one solvent selected from the group consisting of water and water-soluble solvents.
(5) The method for producing a polysaccharide nanofiber-blended polysaccharide composition according to any one of (1) to (4), comprising 0.1 to 60 mass% of the polysaccharide nanofiber (A) in 100 mass% of the polysaccharide nanofiber-blended polysaccharide composition.
(6) The method for producing a polysaccharide nanofiber-blended polysaccharide composition according to any one of (1) to (5), wherein the sol comprising a polysaccharide nanofiber (A) comprises a water-soluble cellulose.
(7) A molded article comprising a polysaccharide nanofiber-blended polysaccharide composition obtained by the production method according to any one of (1) to (6).
(8) The molded article according to (7), which is in a shape of a film, pellet, powder, plate, filament, or container.

The present description encompasses the disclosed contents of JP Patent Application No. 2021-110253, which is the basis of the priority of the present application.

### Advantageous Effects of Invention

The present disclosure can provide a method for producing a polysaccharide nanofiber-blended polysaccharide composition which is capable of obtaining a polysaccharide nanofiber-blended polysaccharide composition whose mechanical physical properties are reinforced by a polysaccharide nanofiber, and can be easily carried out.

### Brief Description of Drawings

[Figure 1] Figure 1 shows the shape of dumbbell specimens obtained in Examples and Comparative Examples.
[Figure 2] Figure 2 shows the results of tensile tests of Examples 1 and 2, and Comparative Example 1.
[Figure 3] Figure 3 shows the results of tensile tests of Example 1, and Comparative Examples 1 to 3.
[Figure 4] Figure 4 shows the results of tensile tests of Examples 1, 3 to 5, and Comparative Example 1.
[Figure 5] Figure 5 shows the results of tensile tests of Examples 6 and 7, and Comparative Example 1.
[Figure 6] Figure 6 shows the results of tensile tests of Example 8 and Comparative Example 4.
[Figure 7] Figure 7 shows the results of tensile tests of Example 9 and Comparative Example 5.
[Figure 8] Figure 8 shows the results of tensile tests of Example 10 and Comparative Example 6.
[Figure 9] Figure 9 shows the results of tensile tests of Examples 11 to 13, and Comparative Example 7.
[Figure 10] Figure 10 shows the results of tensile tests of Examples 8, 14 to 18, and Comparative Example 4.
[Figure 11] Figure 11 shows the results of tensile tests of Example 19 and Comparative Example 8.
[Figure 12] Figure 12 shows the results of tensile tests of Example 20 and Comparative Example 9.
[Figure 13] Figure 13 shows the results of tensile tests of Example 21 and Comparative Example 10.
[Figure 14] Figure 14 shows the results of tensile tests of Example 22 and Comparative Example 11.
[Figure 15] Figure 15 shows the photographs of the filament produced in Example 23 (Figure 15, left), and the filament produced in Comparative Example 12 (Figure 15, right).
[Figure 16] Figure 16 shows the results of tensile tests of Example 23 and Comparative Example 12.
[Figure 17] Figure 17 shows the photograph of the cup-shaped molded article produced in Example 24.
[Figure 18] Figure 18 shows the photograph of the plate-shaped molded article produced in Example 24.

### Description of Embodiments

An aspect of the present embodiment is a method for producing a polysaccharide nanofiber-blended polysaccharide composition comprising a step of mixing a sol comprising a polysaccharide nanofiber (A), a polysaccharide (B), and a solvent (C) capable of dissolving the polysaccharide (B) to obtain a mixture, and a step of drying the mixture to obtain a dry mixture. The method for producing a polysaccharide nanofiber-blended polysaccharide composition according to the present embodiment is also written as "the production method of the present embodiment", or simply as "the production method."

Hereinbelow, the present embodiment will be described in detail.

### (Sol comprising a polysaccharide nanofiber (A))

In the method for producing a polysaccharide nanofiber-blended polysaccharide composition of the present embodiment, a sol comprising a polysaccharide nanofiber (A) is used. In other words, the production method of the present embodiment can also be said to comprise a step of preparing the sol comprising a polysaccharide nanofiber (A).

The sol comprising a polysaccharide nanofiber (A) is preferably a sol comprising 0.2 to 30 wt% of the polysaccharide nanofiber (A), more preferably a sol comprising 0.5 to 20 wt%, and further preferably a sol comprising 0.7 to 10 wt%. It should be noted that the sol as a whole is 100 wt%.

The sol comprising a polysaccharide nanofiber (A) is preferably at least one kind of sol selected from the group consisting of hydrosols and organosols. In other words, for the sol, one kind of sol can be used, or two or more kinds of sols can also be used. When two or more kinds of sols are used, the polysaccharide nanofiber (A) in each sol can be the same kind of polysaccharide nanofiber, or different kinds of polysaccharide nanofibers. The sol comprising a polysaccharide nanofiber (A) is more preferably a hydrosol or an organosol, with a hydrosol being further preferable.

The dispersion medium constituting an organosol is not particularly limited, and examples include organic solvents such as alcohol, ether, ketone, and ester. Specific examples of the dispersion medium include acetone, methyl ethyl ketone, tetrahydrofuran, methyl acetate, ethyl acetate, methanol, ethanol, n-propyl alcohol, isopropyl alcohol, n-butyl alcohol, sec-butyl alcohol, t-butyl alcohol, ethylene glycol, propylene glycol, methyl glycol acetate, N-methyl pyrrolidone, dimethyl sulfoxide, N,N-dimethylformamide, N,N-dimethylacetamide, diacetone alcohol, methyl formate, ethyl lactate, acetonitrile, methyl glycol, dioxane, and dioxolane, with acetone, tetrahydrofuran, N,N-dimethylformamide, dioxane, and dioxolane being preferable. The dispersion medium can be used in a single kind, or in two or more kinds. It should be noted that, for dioxane, 1,4-dioxane is one of preferable aspects.

The polysaccharide nanofiber (A) can be an unmodified polysaccharide nanofiber, or a modified polysaccharide nanofiber. The unmodified polysaccharide nanofiber means a nanofiber in which the hydroxyl group (OH group) of the polysaccharide is not modified, whereas the modified polysaccharide nanofiber means a nanofiber in which at least a part of the hydroxyl group of the polysaccharide is modified. Examples of the modified polysaccharide nanofiber include chemically modified nanofibers such as hydrophobicity modification (esterification, etherification, cyanidation and the like), cation modification, anion modification (TEMPO (2,2,6,6-tetramethylpiperidine-1-oxyl radical) oxidation and the like). The modified polysaccharide nanofiber, when compared with the unmodified polysaccharide nanofibers, has at least a part of the hydroxyl group modified to an ester group or the like, thereby reducing polarity and being suitable when dispersed in a general resin; however, in the production method of the present embodiment, even an unmodified polysaccharide nanofiber can be easily dispersed.

The polysaccharide nanofiber (A) is preferably at least one kind of polysaccharide nanofiber selected from the group consisting of bacterial cellulose nanofibers, plant-based cellulose nanofibers, chitosan nanofibers, and chitin nanofibers. The polysaccharide nanofiber (A) can be used in a single kind, or in two or more kinds. It should be noted that the bacterial cellulose nanofiber is also written as BCNF.

Examples of the plant-based cellulose nanofiber include cellulose nanofibers derived from wood, bamboo, hemp, jute, kenaf, cotton, beet, agricultural waste and the like. The plant-based cellulose nanofiber is preferably a bamboo-based cellulose nanofiber and a wood-based cellulose nanofiber, with a bamboo-based cellulose nanofiber being more preferable in the light of easy defibration.

The bacterial cellulose nanofiber can be any nanofibers derived from cellulose produced by bacterial cellulose-producing bacteria, and the kind of bacterial cellulose-producing bacteria, and culture conditions for bacterial cellulose-producing bacteria are not particularly limited and, for example, conventionally known bacterial cellulose-producing bacteria and culture conditions for bacterial cellulose-producing bacteria can be employed.

The sol comprising a polysaccharide nanofiber (A) can comprise components other than the polysaccharide nanofiber (A) and the dispersion medium. Examples of the component other than the polysaccharide nanofiber (A) and the dispersion medium include water-soluble celluloses. One of preferable aspects of the sol comprising a polysaccharide nanofiber (A) is to comprise a water-soluble cellulose to improve dispersibility of the polysaccharide nanofiber. Examples of the water-soluble cellulose include at least one kind of water-soluble cellulose selected from the group consisting of carboxymethyl cellulose, hydroxyethyl cellulose, and hydroxypropyl cellulose. In other words, one of preferable aspects of the sol comprising a polysaccharide nanofiber (A) is to comprise at least one kind of water-soluble cellulose selected from the group consisting of carboxymethyl cellulose, hydroxyethyl cellulose, and hydroxypropyl cellulose. The sol comprising a polysaccharide nanofiber (A), when comprising a water-soluble cellulose, comprises preferably 1 to 70 wt%, more preferably 5 to 50 wt%, and particularly preferably 10 to 30 wt%, of the water-soluble cellulose in the total 100 wt% of the polysaccharide nanofiber (A) and the water-soluble cellulose.

The water-soluble cellulose can function as a dispersant of a polysaccharide nanofiber, and is preferably present in the sol in an interactional state with the polysaccharide nanofiber (A). Typically, the polysaccharide nanofiber (A) and the water-soluble cellulose are considered to have been interacted by the intermolecular force such as hydrogen bonding, van der Waals force.

The sol comprising a polysaccharide nanofiber (A), when comprising a water-soluble cellulose, can be obtained by adding a water-soluble cellulose to a sol that does not comprise a water-soluble cellulose, but a sol comprising a polysaccharide nanofiber (A) and a water-soluble cellulose can also be prepared by producing the polysaccharide nanofiber (A) in the presence of the water-soluble cellulose. When the polysaccharide nanofiber (A) is a bacterial cellulose nanofiber, a sol comprising the bacterial cellulose nanofiber and a water-soluble cellulose can be prepared by, for example, the following method.

The sol comprising a bacterial cellulose nanofiber and a water-soluble cellulose can be obtained by, for example, culturing a bacterial cellulose-producing bacterium with stirring or aeration in a water-soluble cellulose-added medium, removing bacterial cell components from the obtained culture solution, and purifying the bacterial cellulose nanofiber. The water-soluble cellulose usable may be a commercial product. The amount of a water-soluble cellulose added to a medium can be, for example, an amount so that the final concentration in the medium is 0.5 to 5% (w/v) and the like, and can be suitably set depending on the desired water-soluble cellulose binding amount to a bacterial cellulose nanofiber (the amount of interacting water-soluble cellulose).

For the bacterial cellulose-producing bacterium, known bacteria capable of producing bacterial celluloses can be used, and specific examples usable include *Gluconacetobacter xylinus* strain ATCC 53582, *Gluconacetobacter hansenii* strain ATCC 23769, *Gluconacetobacter xylinus* strain ATCC 700178 (BPR2001), *Gluconacetobacter swingsii* strain BPR3001E, *Acetobacter xylinum* strain JCM10150, *Enterobacter sp.* strain CJF-002, and *Gluconacetobacter intermedius* strain SIID9587 (Accession number NITE BP-01495).

The culture conditions for a bacterial cellulose-producing bacterium can be known culture conditions used for culturing the above bacteria, and examples include an aeration amount of 1 to 10 L/min, a rotation number of 100 to 800 rpm, a temperature of 20 to 40°C, and a culture period of 1 to 7 days. Additionally, known media used for culturing the above bacteria such as Hestrin-Schramm standard medium (HS medium) can be used.

For the purification of a bacterial cellulose nanofiber from the culture solution, an aqueous solution of sodium hydroxide (NaOH) is added to the culture solution and shaken for several hours while heating to about 60°C to thereby lyse bacterial cells. The resultant is centrifuged, the supernatant is removed to thereby remove bacterial cell components, and the precipitate is collected. Subsequently, an operation, by which water is added to the precipitate, centrifugation is carried out, and then the supernatant is removed, can be repeated until pH of the precipitate is 7 or less. By this operation, a sol in which the water-soluble cellulose-bound (interacted) bacterial cellulose nanofiber is dispersed in water can be obtained.

The average fiber diameter of the polysaccharide nanofiber (A) is preferably 2 to 1000 nm, in the light of obtaining sufficient physical property improvement effect by the polysaccharide nanofiber (A). The cellulose nanofiber number average fiber diameter is more preferably 2 to 500 nm, further preferably 2 to 450 nm, and particularly preferably 2 to 400 nm. The average fiber diameter can be defined as the average value in diameter (width) of 20 fibers observed using a transmission electron microscope (TEM).

The average fiber length of the polysaccharide nanofiber (A) is not particularly limited, and is preferably 0.5 to 20 µm, and more preferably 1 to 15 µm. When an average fiber length is within the above range, mechanical physical properties of the polysaccharide nanofiber-blended polysaccharide composition are likely to be particularly excellent, hence preferable. The average fiber length can be defined as the average value in length of 20 fibers observed using an electron microscope.

The average LID (average fiber length/average fiber diameter) of the polysaccharide nanofiber (A) is, in the light of sufficiently improving mechanical physical properties of the polysaccharide nanofiber-blended polysaccharide composition with a small amount of the polysaccharide nanofiber (A), preferably, 50 or more, or 80 or more, or 100 or more, or 120 or more, or 150 or more. The upper limit is not particularly limited but preferably 10000 or less in the light of handleability.

For the sol comprising a polysaccharide nanofiber (A), a commercial product can be used, and examples include sols comprising a bacterial cellulose nanofiber such as Fibnano (registered trademark) CM-NFBC, HE-NFBC, and HP-NFBC (manufactured by Kusano Sakko Inc.), sols comprising a plant-based cellulose nanofiber such as wood-based nanoforest and bamboo-based nanoforest (manufactured by Chuetsu Pulp & Paper Co., Ltd.), a sol comprising a chitosan nanofiber such as BiNFi-s chitosan nanofiber (manufactured by Sugino Machine Limited), and a sol comprising a chitin nanofiber such as BiNFi-s chitin nanofiber (manufactured by Sugino Machine Limited).

Fibnano (registered trademark) CM-NFBC, HE-NFBC, and HP-NFBC are sols comprising a bacterial cellulose nanofiber and a water-soluble cellulose. CM-NFBC comprises, as the water-soluble cellulose, carboxymethyl cellulose (CM), HE-NFBC comprises, as the water-soluble cellulose, hydroxyethyl cellulose (HE), and HP-NFBC comprises, as the water-soluble cellulose, hydroxypropyl cellulose (HP).

### (Polysaccharide (B))

In the method for producing a polysaccharide nanofiber-blended polysaccharide composition of the present embodiment, a polysaccharide (B) is used. The polysaccharide (B) is not particularly limited but typically a polysaccharide expected to improve mechanical physical properties by the polysaccharide nanofiber (A). The polysaccharide (B) can be used in a single kind, or in two or more kinds.

The polysaccharide (B) is a polysaccharide that is not a nanofiber, in other words, a polysaccharide other than the polysaccharide nanofiber (A). The polysaccharide nanofiber (A) is not typically dissolved in water or a water-soluble solvent but dispersed in water and a water-soluble solvent, preferably monodispersed, whereas the polysaccharide (B) can be typically dissolved in water and a water-soluble solvent.

The polysaccharide (B) is preferably at least one kind of polysaccharide selected from the group consisting of celluloses, chitosan, chitin, starch, glycogen, agarose, carrageenan, heparin, hyaluronic acid, xanthan gum, tamarind gum (also written as tamarind seed gum), gellan gum, guar gum, locust bean gum, agar, carrageenan, alginic acid, pectin, succinoglycan, glucomannan, psyllium seed gum, pullulan, gum arabic, karaya gum, and derivatives thereof. Examples of the derivative include chemically modified polysaccharides such as hydrophobicity modification (esterification, etherification, cyanidation and the like), cation modification, anion modification (TEMPO (2,2,6,6-tetramethylpiperidine-1-oxyl radical) oxidation and the like). The polysaccharide (B) is more preferably at least one kind of polysaccharide selected from the group consisting of cellulose derivatives, chitosan, chitin, starch, starch derivatives, tamarind seed gum, xanthan gum, guar gum, guar gum derivatives, and gellan gum, further preferably at least one kind of polysaccharide selected from the group consisting of cellulose ester, chitosan, chitin, starch, etherified starch (e.g., hydroxypropyl starch), tamarind seed gum, xanthan gum, guar gum, cationized guar gum derivatives, and gellan gum, particularly preferably at least one kind of polysaccharide selected from the group consisting of cellulose ester, chitosan, chitin, starch, and hydroxypropyl starch, and still particularly preferably at least one kind of polysaccharide selected from the group consisting of cellulose ester, starch, and hydroxypropyl starch.

Examples of the cellulose ester include at least one kind of cellulose ester selected from the group consisting of cellulose acetate, cellulose propionate, cellulose butyrate, cellulose isobutyrate, cellulose acetate butyrate, cellulose acetobutyrate, cellulose acetate propionate, and cellulose acetopropionate, with at least one kind of cellulose ester selected from the group consisting of cellulose acetate and cellulose propionate being preferable. The cellulose ester has a degree of substitution of preferably 0.05 to 2.95, and more preferably 0.5 to 2.7. The degree of substitution means the substitution proportion of the three hydroxyl groups a cellulose has per glucose unit constituting the cellulose. For example, a cellulose having a degree of substitution of 2.5 means the cellulose in which 2.5 hydroxyl groups on average per glucose unit are substituted.

Etherified starch has a degree of substitution of preferably 0.05 to 2.95, and more preferably 0.07 to 2.7.

The polysaccharide (B) usable may be a commercial product, and examples include, as the cellulose ester, Cellulose Acetate (cellulose acetate) manufactured by Acros and Cellulose Propyonate (cellulose propionate) manufactured by Scientific Polymer. Examples of the etherified starch include Cleatext B-3 (hydroxypropyl distarch phosphate) manufactured by NIHON SHOKUHIN KAKO CO., LTD.

When a commercial product is used as the polysaccharide (B), the polysaccharide (B) can be used as a composition comprising other components. Examples of the other components include, as additives, a plasticizer, an antibacterial agent, an antifungal agent, a preservative (a bacteriostatic agent), a disinfectant, an antiviral agent, a deodorant, a heat plasticizer, an antioxidant, a weather resistant agent, a light resistant agent, a heat resistant agent, a heat stabilizer, a flame retardant, an antistatic agent, a heat dissipation material, a heat storage material, a compatibilizer, a cross-linking agent, a hydrolysis resistant agent, an antifoaming agent, a fibrous reinforcement material, and a plate reinforcement material. These other components can be used in a single kind, or in two or more kinds. Examples of the fibrous reinforcement material include synthetic fibers such as glass fiber, carbon fiber, graphite fiber, steel fiber, potassium titanate fiber, aramid fiber, vinylon fiber, and polyester fiber, and natural fibers such as kenaf fiber, hemp fiber, cotton fiber, and bamboo fiber. Examples of the plate reinforcement material include mica, talc, clay, and glass flake. When in use as a composition comprising the polysaccharide (B), the polysaccharide (B) is contained in an amount of, for example, preferably 0.3 to 70 wt%, more preferably 0.5 to 50 wt%, and particularly preferably 1 to 40 wt%. It should be noted that the composition comprising the polysaccharide (B) as a whole is 100 wt%.

### (Solvent (C))

In the method for producing a polysaccharide nanofiber-blended polysaccharide composition of the present embodiment, a solvent (C) capable of dissolving the polysaccharide (B) is used. It should be noted that the solvent (C) capable of dissolving the polysaccharide (B) is also written simply as the solvent (C). The solvent (C) is not particularly limited as long as it can dissolve the polysaccharide (B). The solvent (C) can be used in a single kind, or in two or more kinds.

The solvent (C) is preferably at least one kind of solvent selected from the group consisting of water and water-soluble solvents, with a water-soluble solvent being more preferable.

The water-soluble solvent is preferably at least one kind of solvent selected from the group consisting of acetone, methyl ethyl ketone, tetrahydrofuran, methyl acetate, ethyl acetate, methanol, ethanol, n-propyl alcohol, isopropyl alcohol, n-butyl alcohol, sec-butyl alcohol, t-butyl alcohol, ethylene glycol, propylene glycol, methyl glycol acetate, N-methyl pyrrolidone, dimethyl sulfoxide, N,N-dimethylformamide, N,N-dimethylacetamide, diacetone alcohol, methyl formate, ethyl lactate, acetonitrile, methyl glycol, dioxane, and dioxolane, and more preferably at least one kind of solvent selected from the group consisting of acetone, tetrahydrofuran, N,N-dimethylformamide, dioxane, and dioxolane. One of preferable aspects of the solvent (C) is to be at least one kind of solvent selected from the group consisting of water, acetone, methyl ethyl ketone, tetrahydrofuran, methyl acetate, ethyl acetate, methanol, ethanol, n-propyl alcohol, isopropyl alcohol, n-butyl alcohol, sec-butyl alcohol, t-butyl alcohol, ethylene glycol, propylene glycol, methyl glycol acetate, N-methyl pyrrolidone, dimethyl sulfoxide, N,N-dimethylformamide, N,N-dimethylacetamide, diacetone alcohol, methyl formate, ethyl lactate, acetonitrile, methyl glycol, dioxane, and dioxolane, and one of more preferable aspects is to be at least one kind of solvent selected from the group consisting of acetone, tetrahydrofuran, N,N-dimethylformamide, dioxane, and dioxolane. It should be noted that, for dioxane, 1,4-dioxane is one of preferable aspects.

### (Step of obtaining a mixture)

The method for producing a polysaccharide nanofiber-blended polysaccharide composition comprises a step of mixing a sol comprising a polysaccharide nanofiber (A), a polysaccharide (B), and a solvent (C) capable of dissolving the polysaccharide (B) to obtain a mixture.

The method for mixing the sol comprising a polysaccharide nanofiber (A), the polysaccharide (B), and the solvent (C) is not particularly limited, and examples include a method in which the polysaccharide (B) and the solvent (C) are added separately to the sol comprising a polysaccharide nanofiber (A) and mixed, a method in which the polysaccharide (B) is dissolved in the solvent (C) to prepare a solution and the solution is added to the sol comprising a polysaccharide nanofiber (A) and mixed, and a method in which the polysaccharide (B) is dissolved in the solvent (C) to prepare a solution and the sol comprising a polysaccharide nanofiber (A) is added to the solution and mixed. Examples of the method in which the polysaccharide (B) and the solvent (C) are added separately to the sol comprising a polysaccharide nanofiber (A) and mixed include a method in which the polysaccharide (B) and the solvent (C) are simultaneously added to the sol comprising a polysaccharide nanofiber (A) and mixed, a method in which the polysaccharide (B) is added to the sol comprising a polysaccharide nanofiber (A) and mixed, and then the solvent (C) is added and mixed, and a method in which the solvent (C) is added to the sol comprising a polysaccharide nanofiber (A) and mixed, and then the polysaccharide (B) is added and mixed.

In the step of obtaining a mixture, other components than the sol comprising a polysaccharide nanofiber (A), the polysaccharide (B), and the solvent (C) can be simultaneously mixed. Examples of the other components than the sol comprising a polysaccharide nanofiber (A), the polysaccharide (B), and the solvent (C) (other components) include a plasticizer, an antibacterial agent, an antifungal agent, a preservative (a bacteriostatic agent), a disinfectant, an antiviral agent, a deodorant, a heat plasticizer, an antioxidant, a weather resistant agent, a light resistant agent, a heat resistant agent, a heat stabilizer, a flame retardant, an antistatic agent, a heat dissipation material, a heat storage material, a compatibilizer, a cross-linking agent, a hydrolysis resistant agent, an antifoaming agent, a fibrous reinforcement material, and a plate reinforcement material. These other components can be used in a single kind, or in two or more kinds. Examples of the fibrous reinforcement material include synthetic fibers such as glass fiber, carbon fiber, graphite fiber, steel fiber, potassium titanate fiber, aramid fiber, vinylon fiber, and polyester fiber, and natural fibers such as kenaf fiber, hemp fiber, cotton fiber, and bamboo fiber. Examples of the plate reinforcement material include mica, talc, clay, and glass flake. Examples of the plasticizer include glycerin, triacetin, diacetin, monoacetin, sorbitol, methyl citrate, ethyl citrate, phthalate ester, and phosphate ester. When other components than the sol comprising a polysaccharide nanofiber (A), the polysaccharide (B), and the solvent (C) are simultaneously mixed, these other components can be comprised in the polysaccharide nanofiber-blended polysaccharide composition. The other components can be components comprised in the sol, polysaccharide, and solvent, and can be used as different components (e.g., additives) in the step of obtaining a mixture. For example, when the polysaccharide (B) is at least one kind of polysaccharide selected from the group consisting of cellulose ester, tamarind seed gum, guar gum, and xanthan gum, one of preferable aspects of the mixture is to comprise a plasticizer. A plasticizer, when comprised, enables to obtain a polysaccharide nanofiber-blended polysaccharide composition with excellent strength and flexibility and also excellent water repellency and oil repellency.

The mixing is typically carried out at a temperature of preferably 4 to 80°C, and more preferably 10 to 30°C. The mixing can be carried out at atmospheric pressure, under reduced pressure or increased pressure, and is preferably carried out at atmospheric pressure in the light of costs.

The mixing time is typically preferably 0.1 to 24 hours, and more preferably 0.1 to 3 hours. Within this range, the polysaccharide nanofiber (A) is likely to be homogeneously dispersed, hence preferable.

The amount of the sol comprising a polysaccharide nanofiber (A) used in the step of obtaining a mixture may be an amount so that typically 0.1 to 60 mass%, preferably 0.3 to 55 mass%, and more preferably 0.3 to 50 mass%, of the polysaccharide nanofiber (A) is contained in 100 mass% of the polysaccharide nanofiber-blended polysaccharide composition.

The amount of the polysaccharide (B) used in the step of obtaining a mixture may be an amount so that typically 40 to 99.7 mass%, preferably 45 to 99.5 mass%, and more preferably 50 to 99 mass%, of the polysaccharide (B) is contained in 100 mass% of the polysaccharide nanofiber-blended polysaccharide composition.

When other components are used, although varying depending on the kind of other components, typically 0.5 to 50 mass%, and preferably 1 to 40 mass%, of the other components may be contained in 100 mass% of the polysaccharide nanofiber-blended polysaccharide composition.

When the sol comprising a polysaccharide nanofiber (A) is a hydrosol, in other words, the dispersion medium is water, and the solvent (C) is a water-soluble solvent, one of preferable aspects of the amount ratio of both (water : water-soluble solvent (molar ratio)) is, for example, 1.5:8.5 to 5.5:4.5. Additionally, in the step of obtaining a dry mixture, one of preferably aspects is the amount so that water and a water-soluble solvent are azeotropic in the light of homogeneously removing water and the water-soluble solvent. For example, in the step of obtaining a dry mixture, when the drying is carried out under reduced pressure of -60 kPa (gauge pressure) and the water-soluble solvent is 1,4-dioxane, one of preferable aspects of water : 1,4-dioxane (molar ratio) is 3.8:6.2 to 4.2:5.8.

### (Step of obtaining a dry mixture)

The method for producing a polysaccharide nanofiber-blended polysaccharide composition comprises a step of drying the mixture obtained in the step of obtaining a mixture, to thereby obtain a dry mixture.

The step of obtaining a dry mixture is carried out for the purpose of removing the dispersion medium constituting the sol comprising a polysaccharide nanofiber (A) and the solvent (C). In the step of obtaining a dry mixture, it is preferable to remove 95 mass% or more, and more preferable to remove 98 mass% or more, of the dispersion medium and the solvent (C). It is most preferable to remove substantially 100 mass% of the dispersion medium and the solvent (C). It should be noted that the substantially 100% removal means 99 mass% or more removal of the dispersion medium and the solvent (C) from the dry mixture.

The method for producing a polysaccharide nanofiber-blended polysaccharide composition may comprise a step of kneading the dry mixture as described later to obtain the polysaccharide nanofiber-blended polysaccharide composition, or may use the dry mixture as the polysaccharide nanofiber-blended polysaccharide composition without carrying out the step of kneading. As a specific example, the mixture obtained by the step of obtaining a mixture is dried while spread out on a palette or the like to obtain a film-like dry mixture, and the film-like dry mixture can be used as the polysaccharide nanofiber-blended polysaccharide composition.

Although varying depending, for example, on the dispersion medium constituting the sol, the boiling point of the solvent (C), and whether the drying step is carried out at atmospheric pressure or under reduced pressure, the temperature for carrying out the step of obtaining a dry mixture may be, for example, 20 to 90°C, and preferably 30 to 80°C. The drying step at atmospheric pressure is preferred in the light of costs, whereas the drying step under reduced pressure is preferred in the light of carrying out the drying at a low temperature. The drying under reduced pressure (vacuum drying) and the drying at atmospheric pressure can also be carried out in combination.

The drying time is typically preferably 3 to 120 hours, and more preferably 1 to 48 hours.

When the drying is carried out at reduced pressure, the pressure is preferably -10 to -100 kPa (gauge pressure), more preferably -50 to -100 kPa (gauge pressure), and particularly preferably -60 to -80 kPa (gauge pressure).

The drying can be carried out, for example, using a vacuum dryer, by solvent evaporation using an evaporator, or solvent evaporation by distillation under reduced pressure.

### (Optional steps)

The method for producing a polysaccharide nanofiber-blended polysaccharide composition can comprise steps, as optional steps, other than the step of obtaining a mixture and the step of obtaining a dry mixture.

Example of the optional step include a step of kneading the dry mixture to obtain a polysaccharide nanofiber-blended polysaccharide composition. The polysaccharide nanofiber-blended polysaccharide composition can be obtained, after kneaded, as a pellet or a molded article of a desired shape, or can be obtained, after obtained a pellet, as a molded article of a desired shape by secondary formation.

The kneading is likely to allow the polysaccharide nanofiber (A) to be more homogeneously dispersed in the polysaccharide (B), hence preferable. The conditions for kneading are not particularly limited, and extended kneading time and increased kneading speed are likely to allow the polysaccharide nanofiber (A) to be more dispersed.

Examples of the temperature for carrying out the kneading include 170 to 220°C, and preferably 170 to 210°C. Example of the time for carrying out the kneading include 3 min to 30 min, and preferably 5 min to 20 min.

When a molded article of the polysaccharide nanofiber-blended polysaccharide composition is a filament, the spinning temperature is, for example, 170 to 220°C, preferably 180 to 215°C, more preferably 190 to 210°C, and further preferably 195°C to 205°C. At a spinning temperature near 200°C, a fiber diameter of a filament to be spun is about the same as the diameter of a spinneret, thereby likely providing the filament to be obtained with excellent mechanical strengths.

The polysaccharide nanofiber-blended polysaccharide composition obtainable by the method for producing a polysaccharide nanofiber-blended polysaccharide composition of the present embodiment is likely to have more excellent mechanical physical properties than a composition comprising a polysaccharide nanofiber obtained by conventionally known methods.

The present inventors speculated the reason for the excellent mechanical physical properties of the polysaccharide nanofiber-blended polysaccharide composition obtainable by the production method of the present embodiment is due to the more homogeneously dispersed polysaccharide nanofiber (A) in the polysaccharide (B) than a conventionally known method because the polysaccharide (B) and the sol comprising a polysaccharide nanofiber (A) with the solvent (C) are mixed.

The shape of the polysaccharide nanofiber-blended polysaccharide composition obtainable by the method for producing a polysaccharide nanofiber-blended polysaccharide composition of the present embodiment is not particularly limited, and can be a molded article of a desired shape. A molded article comprising the polysaccharide nanofiber-blended polysaccharide composition may be obtained by being produced under conditions so that a desired shape of the polysaccharide nanofiber-blended polysaccharide composition is achieved, or may also be obtained by secondary formation of the polysaccharide nanofiber-blended polysaccharide composition. The shape of a molded article is preferably, for example a film, a pellet, a powder, a plate, a filament, or a container. Examples of the container include a cup, a plate, a bowl, and a box.

### Example

Hereinafter, the present embodiment will be described in reference to examples, but the present disclosures are not limited to these examples.

The following components were used in Examples and Comparative Examples.
CM-BCNF Sol: a hydrosol comprising the total 1 wt% of carboxymethyl cellulose (CM) and a bacterial cellulose nanofiber (BCNF) (in the total 100 wt% of CM and BCNF, CM content 13.7 wt%, BCNF content 86.3 wt%) (manufactured by Kusano Sakko Inc.: Fibnano (registered trademark) CM-NFBC)
HE-BCNF Sol: a hydrosol comprising the total 1 wt% of hydroxyethyl cellulose (HE) and a bacterial cellulose nanofiber (BCNF) (in the total 100 wt% of HE and BCNF, HE content 22.5 wt%, BCNF content 77.5 wt%) (manufactured by Kusano Sakko Inc.: Fibnano (registered trademark) HE-NFBC)
HP-BCNF Sol: a hydrosol comprising the total 1 wt% of hydroxypropyl cellulose (HP) and a bacterial cellulose nanofiber (BCNF) (in the total 100 wt% of HP and BCNF, HP content 26.0 wt%, BCNF content 74.0 wt%) (manufactured by Kusano Sakko Inc.: Fibnano (registered trademark) HP-NFBC)
Bamboo CNF sol: a hydrosol comprising 1.7 wt% of a bamboo-based cellulose nanofiber (manufactured by Chuetsu Pulp & Paper Co., Ltd.: bamboo-based nanoforest)
Chitin NF sol: a hydrosol comprising 5 wt% of a chitin nanofiber (manufactured by Sugino Machine Limited: BiNFi-s a chitin nanofiber)
Chitosan NF sol: a hydrosol comprising 5 wt% of a chitosan nanofiber (manufactured by Sugino Machine Limited: BiNFi-s a chitosan nanofiber)
CA: Cellulose acetate comprising 22 wt% of a plasticizer (degree of substitution of cellulose acetate is 2.5 (acetyl group 2.5, hydroxyl group 0.5))
CA (no plasticizer): Cellulose acetate (manufactured by Acros: cellulose acetate, weight average molecular weight Mw. 100,000, degree of substitution of cellulose acetate is 2.5 (acetyl group 2.5, hydroxyl group 0.5))
CP: Cellulose propionate (manufactured by Scientific Polymer, Inc.: cellulose propyonate, degree of substitution of cellulose propionate is 2.5 (propionyl group 2.5, hydroxyl group 0.5)) HP starch: hydroxypropyl starch (manufactured by NIHON SHOKUHIN KAKO CO., LTD.: Cleartext B-3, degree of substitution of hydroxypropyl distarch phosphate is 0.11)
Tamarind seed gum: tamarind seed gum (manufactured by Sumitomo Pharma Food & Chemical Co., Ltd.: Glyloid 6C) (used in Example 19 and Comparative Example 8)
Tamarind seed gum: tamarind seed gum (manufactured by Sumitomo Pharma Food & Chemical Co., Ltd.: tamarind seed gum (purified product)) (used in Example 29)
Xanthan gum: xanthan gum (manufactured by Sumitomo Pharma Food & Chemical Co., Ltd.: KELDENT)
Guar gum: guar gum (manufactured by Sumitomo Pharma Food & Chemical Co., Ltd.: Guarpack PF-20)
Cationized guar gum: Cationized guar gum (manufactured by Sumitomo Pharma Food & Chemical Co., Ltd.: Rhaball gum CG-M)
CA (plasticizer content of 37 wt%): cellulose acetate containing 37 wt% of a plasticizer (degree of substitution of cellulose acetate is 2.5 (acetyl group 2.5, hydroxyl group 0.5))

### [Example 1]

### <Preparation of a cellulose acetate solution in which BCNF is dispersed (mixture)>

250 mL of acetone was added to 50 g of the CM-BCNF sol (total amount of CM and BCNF was 0.5 g), stirred until homogeneously dispersed, and then 4.5 g of CA was added, followed by stirring until CA was completely dissolved, thereby obtaining a mixture.

### <Drying the mixture>

The mixture was poured into a stainless steel tray, the stainless steel tray was placed on a hot plate at 80°C and dried for about 5 hours to evaporate the solvent, thereby obtaining a dry mixture (cast film) (total amount of CM and BCNF was 10 wt%).

### <Kneading>

The cast film was finely crushed and then kneaded using a melt kneader (manufactured by DSM, Xplore MC5) for 5 to 10 minutes under a condition of 190 to 200°C at a screw-rotation speed of 60 rpm. The strand obtained by kneading was cut, thereby obtaining pellets (BCNF-containing cellulose acetate pellet).

### <Film preparation>

1.0 to 2.0 g of the pellet was weighed and heated at 200°C for 6 minutes in a hot press (manufactured by Imoto machinery Co., LTD, 180C Type) without applying pressure to dissolve the resin, and then the condition at 200°C at applied pressure of 1.56 MPa was maintained for 4 minutes, followed by slowly cooling to room temperature while applying a load of 20 kg, thereby preparing a film.

### <Tensile test specimen preparation>

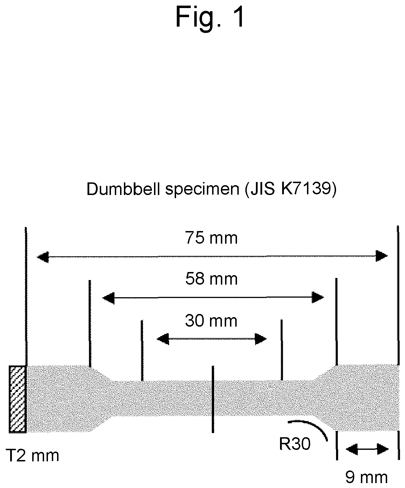

The prepared film was punched to a dumbbell specimen (Figure 1) (in conformity with JIS K7139) using a punching machine (manufactured by Imoto machinery Co., LTD, IMC-1948-B Type).

### <Tensile test>

The tensile test was carried out using the prepared dumbbell specimen using a tensile tester (manufactured by Shimadzu Corporation, EZ-SX 200N) at a rate of 5 mm/min.

### [Comparative Example 1]

A film was prepared in conformity with the section of Film Preparation of Example 1, except that the pellet of Example 1 was changed to CA pellet, and a dumbbell specimen was produced from the film by the same method as Example 1 to carry out the tensile test.

### [Example 2]

To a 500 mL-beaker, 50 g of the CM-BCNF sol (total amount of CM and BCNF was 0.5 g) was added. 250 mL of acetone was added to the beaker and stirred (total amount about 300 mL).

A glass funnel equipped with a glass filter was set up to a suction filter, and a PTFE membrane filter having a pore size of 0.45 µm was set up on the glass filter.

The solution in the beaker was slowly poured into the glass funnel. About 50 mL of the dispersion comprising BCNF was left in the glass funnel, and about 250 mL of the liquid was dropped into a suction bottle by suction filtration.

250 mL of acetone was added to the glass funnel and gently stirred using a glass rod (total amount about 300 mL) (operation A).

About 50 mL of the dispersion comprising BCNF was left in the glass funnel, and about 250 mL of the liquid was dropped into a suction bottle by suction filtration (operation B).

Operation A and operation B were carried out three times in total, thereby substituting water constituting the hydrosol with acetone.

About 50 mL of the acetone-substituted sol left in the glass funnel was transferred to the 500 mL-beaker, thereby obtaining a CM-BCNF sol (organosol).

A mixture, a dry mixture (cast film), a pellet, a film, and a dumbbell specimen were produced in the same manner as Example 1, except that the CM-BCNF sol was changed to the CM-BCNF sol (organosol), thereby carrying out the tensile test.

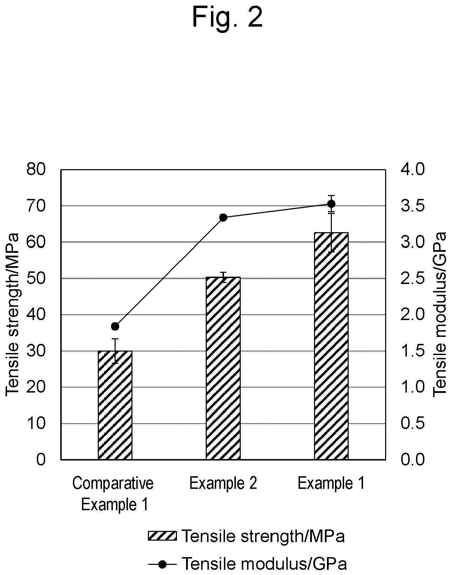

Table 1 and Figure 2 show the results of tensile tests of Examples 1 and 2, and Comparative Example 1.

### [Table 1]

**Table 1**

| | Comparative Example 1 | Example 2 | Example 1 |
|---|---|---|---|
| Tensile strength /MPa | 30.0 | 50.3 | 62.6 |
| Standard deviation /σ | 3.4 | 1.4 | 5.3 |
| Tensile modulus /GPa | 1.84 | 3.34 | 3.53 |
| Standard deviation /σ | 0.02 | 0.01 | 0.11 |
| Strain /% | 31.8 | 2.1 | 3.0 |
| Standard deviation /σ | 13.5 | 0.1 | 0.4 |

Comparative Example 1, and Example 1 and Example 2 confirmed improved strengths (reinforced mechanical physical properties) in the polysaccharide nanofiber-blended polysaccharide composition obtained by the production method of the present embodiment when compared with the material free from a polysaccharide nanofiber (Comparative Example 1). It is suggested that both the hydrosol and the organosol are useful as the sol comprising a polysaccharide nanofiber (A).

### [Comparative Example 2]

The CM-BCNF sol was freeze dried, thereby obtaining CM-BCNF (a mixture of CM and BCNF). 0.5 g of CM-BCNF was finely crushed and mixed thoroughly with 4.5 g of CA, and then kneaded under the conditions described in the section of Kneading of Example 1, thereby obtaining a pellet (total amount of CM and BCNF was 10 wt%). Using the obtained pellet, a film and a dumbbell specimen were produced by the method described in Example 1 thereby carrying out the tensile test.

### [Comparative Example 3]

The CM-BCNF sol was freeze dried, thereby obtaining CM-BCNF (a mixture of CM and BCNF). 1.0 g of CM-BCNF was finely crushed and mixed thoroughly with 4.0 g of CA, and then kneaded under the conditions described in the section of Kneading of Example 1, thereby preparing a master batch (total amount of CM and BCNF was 20 wt%).

2.5 g of the master batch and 2.5 g of CA were mixed thoroughly, and then kneaded under the conditions described in the section of Kneading of Example 1, thereby obtaining a pellet (total amount of CM and BCNF was 10 wt%). Using the obtained pellet, a film and a dumbbell specimen were produced by the method described in Example 1, thereby carrying out the tensile test.

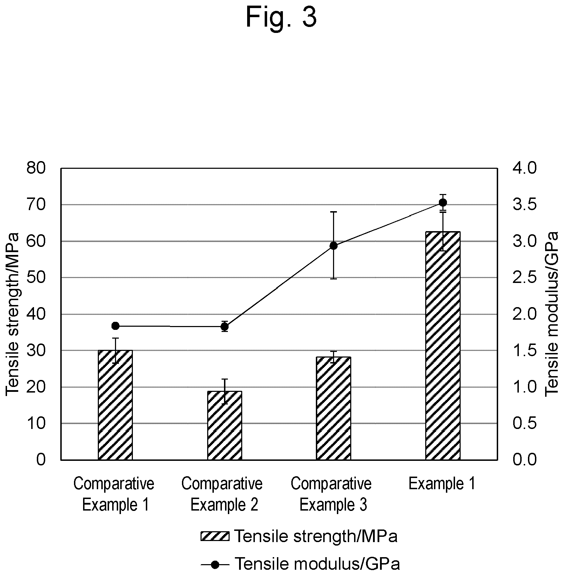

Table 2 and Figure 3 show the results of tensile tests of Examples 1, and Comparative Examples 1 to 3.

### [Table 2]

**Table 2**

| | Comparative Example 1 | Comparative Example 2 | Comparative Example 3 | Example 1 |
|---|---|---|---|---|
| Tensile strength /MPa | 300 | 18.8 | 28.2 | 62.6 |
| Standard deviation /σ | 3.4 | 3.4 | 1.5 | 5.3 |
| Tensile modulus /GPa | 1.84 | 1.83 | 2.94 | 3.53 |
| Standard deviation /σ | 0.02 | 0.07 | 0.46 | 0.11 |
| Strain /% | 31.8 | 1.6 | 2.7 | 3.0 |
| Standard deviation /σ | 13.5 | 0.4 | 0.8 | 0.4 |

Comparative Examples 1 to 3, and Example 1 confirmed improved strengths (reinforced mechanical physical properties) in the polysaccharide nanofiber-blended polysaccharide composition obtained by the production method of the present embodiment when compared with the material free from a polysaccharide nanofiber (Comparative Example 1). Additionally, sufficiently improved strengths (reinforcement in mechanical physical properties) were not confirmed in the materials obtained by freeze drying followed by mixing of the polysaccharide nanofiber and the polysaccharide. For this reason, it is suggested that the production method of the present embodiment is more advantageous than other production methods in the light of mechanical physical properties of a composition to be obtained.

### [Example 3]

A dry mixture (cast film), a pellet, a film, and a dumbbell specimen were produced in the same manner as Example 1, except that the drying of the mixture in Example 1 was changed to the following operation, thereby carrying out the tensile test.

### <Drying of the mixture>

The mixture was poured into a stainless steel tray, the stainless steel tray was covered with a stainless steel plate, allowed to stand in a draft, and left for about 3 to 5 days under the conditions of room temperature (20 to 25°C) and a humidity of 50 to 60%, thereby obtaining a dry mixture (cast film) (total amount of CM and BCNF was 10 wt%).

### [Example 4]

A dry mixture (cast film), a pellet, a film, and a dumbbell specimen were produced in the same manner as Example 1, except that the drying of the mixture in Example 1 was changed to the following operation, thereby carrying out the tensile test.

### <Drying of the mixture>

The mixture was poured into a stainless steel tray, the stainless steel tray was covered with a dust cover aluminum foil, allowed to stand in a draft and left for about 2 to 3 days under the conditions of room temperature (20 to 25°C) and a humidity of 50 to 60%, thereby obtaining a dry mixture (cast film) (total amount of CM and BCNF was 10 wt%).

### [Example 5]

A dry mixture (cast film), a pellet, a film, and a dumbbell specimen were produced in the same manner as Example 1, except that the drying of the mixture in Example 1 was changed to the following operation, thereby carrying out the tensile test.

### <Drying of the mixture>

The mixture was poured into a stainless steel tray, the stainless steel tray was set in a vacuum dryer and dried for a whole day under the condition of room temperature (20 to 25°C) and -60 kPa (gauge pressure), thereby obtaining a dry mixture (cast film) (total amount of CM and BCNF was 10 wt%).

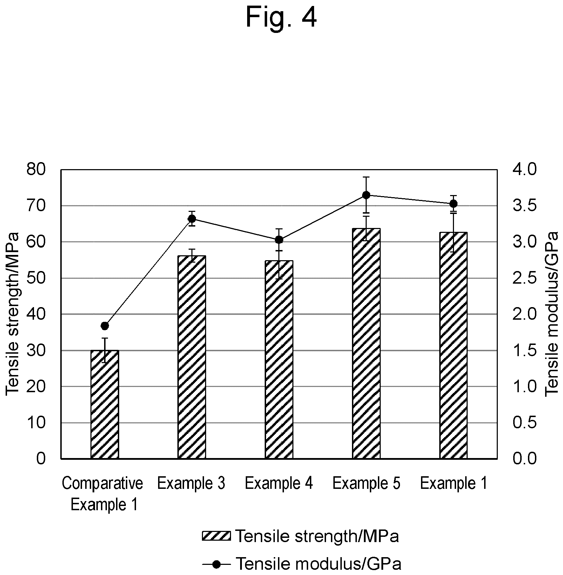

Table 3 and Figure 4 show the results of tensile tests of Examples 1, 3 to 5, and Comparative Example 1.

### [Table 3]

**Table 3**

| | Comparative Example 1 | Example 3 | Example 4 | Example 5 | Example 1 |
|---|---|---|---|---|---|
| Tensile strength /MPa | 30.0 | 56.2 | 54.8 | 63.7 | 62.6 |
| Standard deviation /σ | 3.4 | 1.8 | 5.0 | 3.4 | 5.3 |
| Tensile modulus /GPa | 1.84 | 3.32 | 3.03 | 3.65 | 3.53 |
| Standard deviation /σ | 0.02 | 0.10 | 0.15 | 0.25 | 0.11 |
| Strain /% | 31.8 | 4.0 | 4.6 | 4.4 | 3.0 |
| Standard deviation /σ | 13.5 | 0.5 | 0.1 | 0.7 | 0.4 |

Comparative Example 1, and Examples 1, 3 to 5 confirmed improved strengths (reinforced mechanical physical properties) in the polysaccharide nanofiber-blended polysaccharide composition obtained by the production method of the present embodiment regardless of the type of the method of drying when compared with the material free from a polysaccharide nanofiber (Comparative Example 1).

### [Example 6]

### <Preparation of a cellulose acetate solution in which BCNF is dispersed (mixture)>

Distilled water and 250 mL of acetone were added to the CM-BCNF sol, stirred until homogeneously dispersed, and then CA was added, followed by stirring until CA was completely dissolved, thereby obtaining a mixture.

### <Drying of the mixture>

The mixture was poured into a stainless steel tray, the stainless steel tray was covered with a dust cover aluminum foil, allowed to stand in a draft and left for about 2 to 3 days under the conditions of room temperature (20 to 25°C) and a humidity of 50 to 60%, thereby obtaining a dry mixture (cast film) (total amount of CM and BCNF was 1 wt%, 3 wt%, 5 wt%, or 10 wt%).

A pellet, a film, and a dumbbell specimen were produced by carrying out the operation on and after the kneading in the same manner as Example 1, thereby carrying out the tensile test.

### [Example 7]

### <Preparation of a cellulose acetate solution in which BCNF is dispersed (mixture)>

Distilled water and 250 mL of acetone were added to the CM-BCNF sol, stirred until homogeneously dispersed, and then CA was added, followed by stirring until CA was completely dissolved, thereby obtaining a mixture.

### <Drying of the mixture>

The mixture was poured into a stainless steel tray, the stainless steel tray was placed on a hot plate at 80°C and dried for about 3 to 5 hours to evaporate the solvent, thereby obtaining a dry mixture (cast film) (total amount of CM and BCNF was 1 wt%, 3 wt%, 5 wt%, or 10 wt%).

A pellet, a film, and a dumbbell specimen were produced by carrying out the operation on and after the kneading in the same manner as Example 1, thereby carrying out the tensile test.

Table 4 shows amounts of the CM-BCNF sol, distilled water, and CA (g) according to each total amount of CM and BCNF in the section of Preparation of a cellulose acetate solution in which BCNF is dispersed (mixture) in Example 6 and Example 7.

### [Table 4]

**Table 4**

| Total amount of CM and BCNF | CM-BCNF Sol /g | Distilled water Ig | CA /g |
|---|---|---|---|
| 1wt% | 5 | 45 | 4.95 |
| 3wt% | 15 | 35 | 4.85 |
| 5wt% | 25 | 25 | 4.75 |
| 10wt% | 50 | 0 | 4.5 |

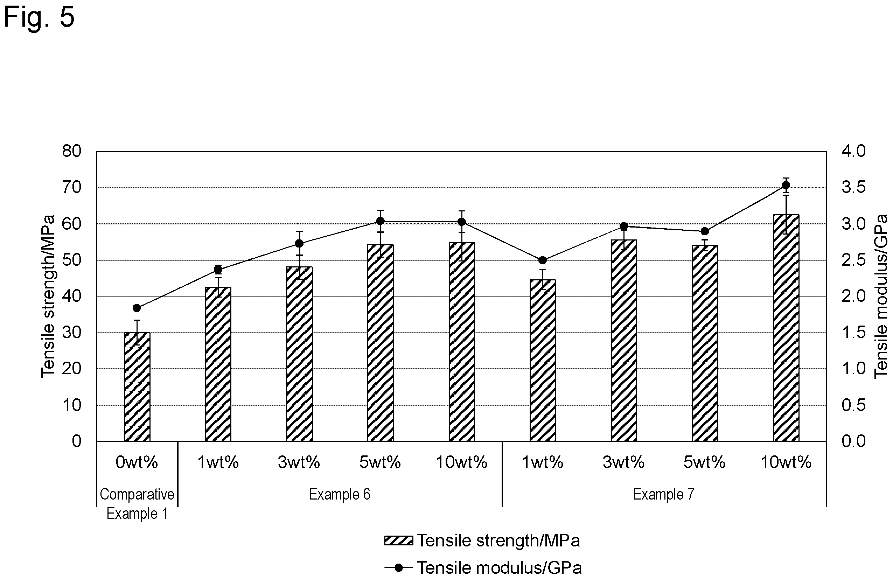

Table 5 and Figure 5 show the results of tensile tests of Example 6 and Example 7, and Comparative Example 1.

### [Table 5]

**Table 5**

| | Total amount of CM and BCNF | Tensile strength /MPa | Tensile modulus /GPa | Strain /% |
|---|---|---|---|---|
| Comparative Example 1 | 0wt% | 30.0 | 1.84 | 31.8 |
| Example 6 | 1wt% | 42.5 | 2.37 | 15.2 |
| | 3wt% | 48.1 | 2.73 | 8.3 |
| | 5wt% | 54.3 | 3.04 | 5.1 |
| | 10wt% | 54.8 | 3.03 | 4.7 |
| Example 7 | 1wt% | 44.6 | 250 | 13.3 |
| | 3wt% | 55.6 | 2.97 | 4.6 |
| | 5wt% | 54.1 | 2.90 | 50 |
| | 10wt% | 62.6 | 3.53 | 3.0 |

Comparative Example 1, and Example 6 and Example 7 confirmed improved strengths (reinforced mechanical physical properties) in the polysaccharide nanofiber-blended polysaccharide compositions obtained by the production method of the present embodiment and comprising various amounts of polysaccharide nanofibers when compared with the material free from a polysaccharide nanofiber (Comparative Example 1).

### [Example 8]

### <Preparation of a cellulose acetate solution in which BCNF is dispersed (mixture)>

250 mL of acetone was added to 50 g of the CM-BCNF sol, stirred until homogeneously dispersed, and then 4.5 g of CA was added, followed by stirring until CA was completely dissolved, thereby obtaining a mixture.

### <Drying of the mixture>

The mixture was poured into a stainless steel tray, the stainless steel tray was set in a vacuum dryer and dried over a period of 15 hours under the condition of room temperature (20 to 25°C) and -60 kPa (gauge pressure), thereby obtaining a dry mixture (cast film) (total amount of CM and BCNF was 10 wt%).

A pellet, a film, and a dumbbell specimen were produced by carrying out the operation on and after the kneading in the same manner as Example 1, thereby carrying out the tensile test.

### [Comparative Example 4]

A mixture, a dry mixture (cast film), a pellet, a film, and a dumbbell specimen were produced in the same manner as Example 8, except that 50 g of the CM-BCNF sol was changed to 0.5 g of CA (no plasticizer) and 50 g of distilled water, thereby carrying out the tensile test.

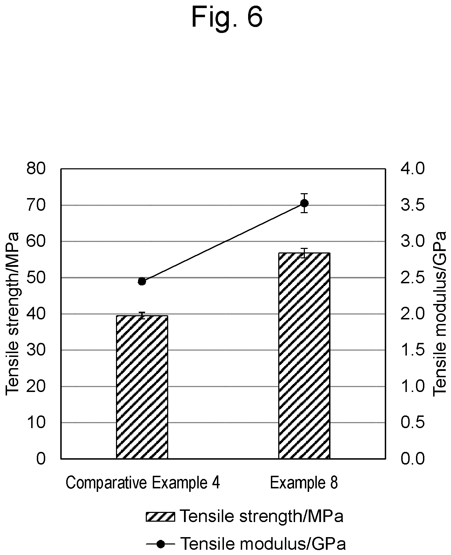

Table 6 and Figure 6 show the results of tensile tests of Example 8 and Comparative Example 4.

### [Table 6]

**Table 6**

| | Comparative Example 4 | Example 8 |
|---|---|---|
| Tensile strength /MPa | 39.5 | 56.8 |
| Standard deviation /σ | 0.9 | 1.3 |
| Tensile modulus /GPa | 2.45 | 3.53 |
| Standard deviation /σ | 0.04 | 0.13 |
| Strain /% | 20.0 | 3.6 |
| Standard deviation /σ | 8.7 | 0.8 |

Comparative Example 4 and Example 8 confirmed improved strengths (reinforced mechanical physical properties) in the polysaccharide nanofiber-blended polysaccharide composition to be obtained even when acetone was used as the solvent (C) and the drying was carried out using the vacuum dryer in the production method of the present embodiment when compared with the material free from a polysaccharide nanofiber (Comparative Example 4).

### [Example 9]

A mixture, a dry mixture (cast film), a pellet, a film, and a dumbbell specimen were produced in the same manner as Example 8, except that acetone was changed to tetrahydrofuran (THF), there by carrying out the tensile test.

### [Comparative Example 5]

A mixture, a dry mixture (cast film), a pellet, a film, and a dumbbell specimen were produced in the same manner as Example 9, except that 50 g of the CM-BCNF sol was changed to 0.5 g of CA (no plasticizer) and 50 g of distilled water, thereby carrying out a tensile test.

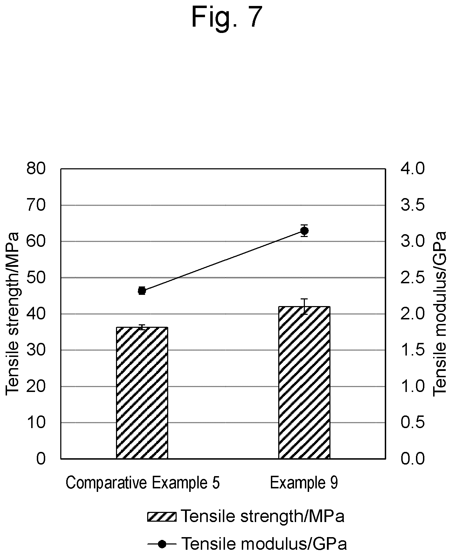

Table 7 and Figure 7 show the results of tensile tests of Examples 9 and Comparative Example 5.

### [Table 7]

**Table 7**

| | Comparative Example 5 | Example 9 |
|---|---|---|
| Tensile strength /MPa | 36.3 | 42.0 |
| Standard deviation /σ | 0.7 | 2.1 |
| Tensile modulus /GPa | 2.32 | 3.15 |
| Standard deviation /σ | 0.05 | 0.08 |
| Strain /% | 28.8 | 2.3 |
| Standard deviation /σ | 3.4 | 0.3 |

Comparative Example 5 and Example 9 confirmed improved strengths (reinforced mechanical physical properties) in the polysaccharide nanofiber-blended polysaccharide composition to be obtained even when THF was used instead of acetone as the solvent (C) in the production method of the present embodiment when compared with the material free from a polysaccharide nanofiber (Comparative Example 5).

### [Example 10]

A mixture, a dry mixture (cast film), a pellet, a film, and a dumbbell specimen were produced in the same manner as Example 8, except that CA was changed to CP, there by carrying out the tensile test.

### [Comparative Example 6]

A mixture, a dry mixture (cast film), a pellet, a film, and a dumbbell specimen were produced in the same manner as Example 8, except that the mixture in Example 8 was changed to a mixture obtained by adding 5.0 g of CP to an aqueous solution in which 50 g of distilled water and 250 mL of acetone were mixed followed by stirring until CP was completely dissolved, thereby carrying out the tensile test.

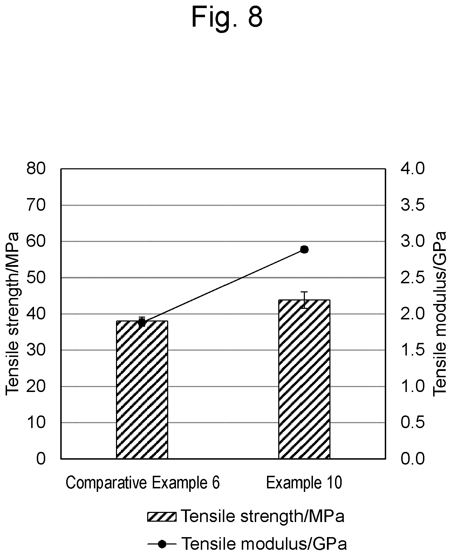

Table 8 and Figure 8 show the results of tensile tests of Examples 10 and Comparative Example 6.

### [Table 8]

**Table 8**

| | Comparative Example 6 | Example 10 |
|---|---|---|
| Tensile strength /MPa | 38.0 | 43.8 |
| Standard deviation /σ | 1.1 | 2.3 |
| Tensile modulus /GPa | 1.88 | 2.89 |
| Standard deviation /σ | 0.05 | 0.04 |
| Strain /% | 27.5 | 2.0 |
| Standard deviation /σ | 8.1 | 0.2 |

Comparative Example 6 and Example 10 confirmed improved strengths (reinforced mechanical physical properties) in the polysaccharide nanofiber-blended polysaccharide composition to be obtained even when cellulose propionate was used instead of cellulose acetate as the polysaccharide (B) in the production method of the present embodiment when compared with the material free from a polysaccharide nanofiber (Comparative Example 6).

### [Example 11]

### <Preparation of a polysaccharide solution in which BCNF is dispersed>

10 g of water was added to 0.5 g of HP starch and heated at 90°C for 1 hour to dissolve HP starch. 50 g of the CM-BCNF sol was added thereto and stirred until homogeneously dispersed, thereby obtaining a mixture (HP starch: total amount of CM and BCNF (mass ratio) = 50:50).

### <Drying of the mixture (preparation of a cast film)>

The mixture was poured into a stainless steel tray, the stainless steel tray was set in a vacuum dryer and dried in vacuum for about 3 hours while allowing air to circulate at 70°C and -10 kPa (gauge pressure), thereby removing moisture while defoaming so that the total mass was about 10 g, and then the temperature was down to room temperature, and natural drying was carried out for about 2 days, thereby obtaining a dry mixture (cast film).

### <Tensile test specimen preparation>

The prepared film was punched to a dumbbell specimen (Figure 1) (in conformity with JIS K7139) using a punching machine (manufactured by Imoto machinery Co., LTD, IMC-1948-B Type).

The tensile test was carried out by the same method as Example 1.

### [Example 12]

A dry mixture (cast film) and a dumbbell specimen were produced in the same manner as Example 11, except that a mixture was obtained by changing the amount of the HP starch and the amount of the CM-BCNF sol (HP starch: total amount of CM and BCNF (mass ratio) = 67:33), thereby carrying out the tensile test.

### [Example 13]

A dry mixture (cast film) and a dumbbell specimen were produced in the same manner as Example 11, except that a mixture was obtained by changing the amount of the HP starch and the amount of the CM-BCNF sol (HP starch: total amount of CM and BCNF (mass ratio) = 89:11), thereby carrying out the tensile test.

### [Comparative Example 7]

A cast film and a dumbbell specimen were produced in the same manner as Example 11, except that the CM-BCNF sol was not used, thereby carrying out the tensile test.

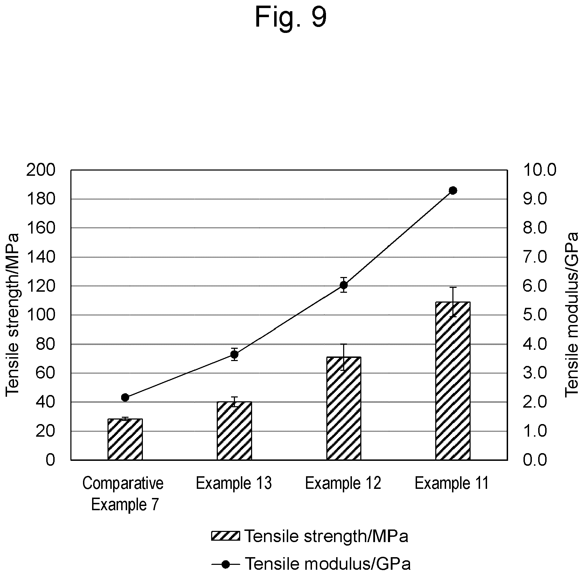

Table 9 and Figure 9 show the results of tensile tests of Examples 11 to 13 and Comparative Example 7.

### [Table 9]

**Table 9**

| | | Comparative Example 7 | Example 13 | Example 12 | Example 11 |
|---|---|---|---|---|---|
| Ratio | Total amount of CM and BCNF | 0 | 11 | 33 | 50 |
| | Starch | 100 | 89 | 67 | 50 |
| Tensile strength /MPa | | 28.5 | 40.2 | 71.0 | 108.9 |
| Standard deviation /σ | | 1.1 | 3.4 | 9.0 | 10.2 |
| Tensile modulus /GPa | | 2.16 | 3.65 | 6.04 | 9.30 |
| Standard deviation /σ | | 0.02 | 0.21 | 0.25 | 0.07 |
| Strain /% | | 2.8 | 2.1 | 2.1 | 2.0 |
| Standard deviation /σ | | 0.1 | 0.4 | 0.6 | 0.2 |

Comparative Example 7 and Examples 11 to 13 confirmed improved strengths (reinforced mechanical physical properties) in the polysaccharide nanofiber-blended polysaccharide composition to be obtained even when HP starch was used instead of cellulose acetate as the polysaccharide (B) and water was used as the solvent (C) in the production method of the present embodiment when compared with the material free from a polysaccharide nanofiber (Comparative Example 7).

### [Example 14]

The operation was carried out in the same manner as Example 8, except that the CM-BCNF sol was changed to the HE-BCNF sol.

### [Example 15]

The operation was carried out in the same manner as Example 8, except that the CM-BCNF sol was changed to the HP-BCNF sol.

### [Example 16]

20.6 g of distilled water was added to 29.4 g of the bamboo CNF sol (a hydrosol comprising 1.7 wt% of a bamboo-based cellulose nanofiber (bamboo CNF)) (bamboo CNF 0.5 g) to prepare a hydrosol comprising 1 wt% of the bamboo-based cellulose nanofiber (1 wt% bamboo CNF sol).

The operation was carried out in the same manner as Example 8, except that the CM-BCNF sol was changed to the 1 wt% bamboo CNF sol.

### [Example 17]

40 g of distilled water was added to 10 g of the chitin NF sol (a hydrosol comprising 5 wt% of chitin nanofiber (chitin NF)) (chitin NF 0.5 g) to prepare a hydrosol comprising 1 wt% of the chitin nanofiber (1 wt% chitin NF sol).

The operation was carried out in the same manner as Example 8, except that the CM-BCNF sol was changed to the 1 wt% chitin NF sol.

### [Example 18]

40 g of distilled water was added to 10 g of the chitosan NF sol (a hydrosol comprising 5 wt% of chitosan nanofiber (chitosan NF)) (chitosan NF 0.5 g)to prepare a hydrosol comprising 1 wt% of the chitosan nanofiber (1 wt% chitosan NF sol).

The operation was carried out in the same manner as Example 8, except that the CM-BCNF sol was changed to the 1 wt% chitosan NF sol.

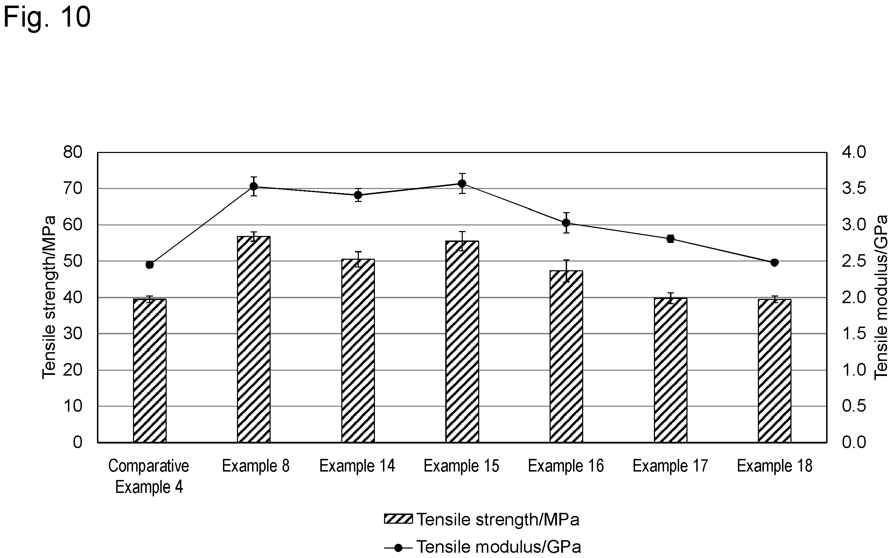

Table 10 and Figure 10 show the results of tensile tests of Examples 8, 14 to 18, and Comparative Example 4.

### [Table 10]

**Table 10**

| | Comparative Example 4 | Example 8 | Example 14 | Example 15 | Example 16 | Example 17 | Example 18 |
|---|---|---|---|---|---|---|---|
| Tensile strength /MPa | 39.5 | 56.8 | 50.5 | 55.5 | 47.3 | 39.8 | 39.5 |
| Standard deviation /σ | 0.9 | 1.3 | 2.1 | 2.7 | 3.0 | 1.5 | 0.9 |
| Tensile modulus /GPa | 2.45 | 3.53 | 3.41 | 3.57 | 3.03 | 2.81 | 2.48 |
| Standard deviation /σ | 0.04 | 0.13 | 0.09 | 0.14 | 0.14 | 0.05 | 0.01 |
| Strain /% | 20.0 | 3.6 | 2.4 | 2.7 | 3.3 | 11.8 | 15.6 |
| Standard deviation /σ | 8.7 | 0.8 | 0.3 | 0.6 | 1.0 | 2.4 | 2.7 |

Comparative Example 4 and Examples 8, 14 to 18 confirmed improved strengths (reinforced mechanical physical properties) in the polysaccharide nanofiber-blended polysaccharide composition to be obtained even when sols comprising various kinds of polysaccharide nanofibers were used as the sol comprising a polysaccharide nanofiber (A) in the production method of the present embodiment when compared with the material free from a polysaccharide nanofiber (Comparative Example 4).

### [Example 19]

### <Preparation of a tamarind seed gum aqueous solution in which BCNF is dispersed (mixture)>

56 mL of distilled water was added to 7 g of the CM-BCNF sol, stirred until homogeneously dispersed, and then 0.63 g of tamarind seed gum was added, followed by stirring until tamarind seed gum was completely dissolved, thereby obtaining a mixture.

### <Drying of the mixture>

The mixture was poured into a polypropylene tray, allowed to stand and be dried for about 2 to 3 days under the condition of room temperature and a humidity of 40 to 60%, thereby obtaining a dry mixture (cast film) (total amount of CM and BCNF was 10 wt%).

### <Tensile test specimen preparation>

The prepared film was punched to a dumbbell specimen (Figure 1) (in conformity with JIS K7139) using a punching machine (manufactured by Imoto machinery Co., LTD, IMC-1948-B Type).

The tensile test was carried out using the prepared dumbbell specimen by the same method as Example 1.

### [Comparative Example 8]

A cast film and a dumbbell specimen were produced in the same manner as Example 19, except that the CM-BCNF sol was not used, thereby carrying out the tensile test.

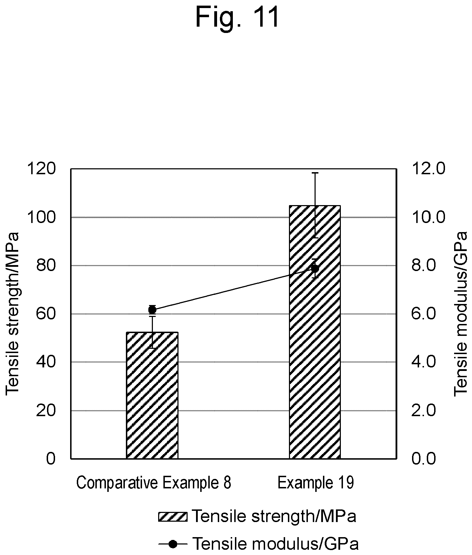

Table 11 and Figure 11 show the results of tensile tests of Example 19 and Comparative Example 8.

### [Table 11]

**Table 11**

| | Comparative Example 8 | Example 19 |
|---|---|---|
| Tensile strength /MPa | 52.3 | 104.9 |
| Standard deviation /σ | 6.6 | 13.4 |
| Tensile modulus /GPa | 6.17 | 7.88 |
| Standard deviation /σ | 0.17 | 0.39 |
| Strain /% | 1.0 | 2.2 |
| Standard deviation /σ | 0.2 | 0.5 |

Comparative Example 8 and Examples 19 confirmed improved strengths (reinforced mechanical physical properties) in the polysaccharide nanofiber-blended polysaccharide composition to be obtained even when tamarind seed gum was used as the polysaccharide (B) and water was used as the solvent (C) in the production method of the present embodiment when compared with the material free from a polysaccharide nanofiber (Comparative Example 8).

### [Example 20]

The operation was carried out in the same manner as Example 19, except that the tamarind seed gum was changed to xanthan gum.

### [Comparative Example 9]

The operation was carried out in the same manner as Comparative Example 8, except that the tamarind seed gum was changed to xanthan gum.

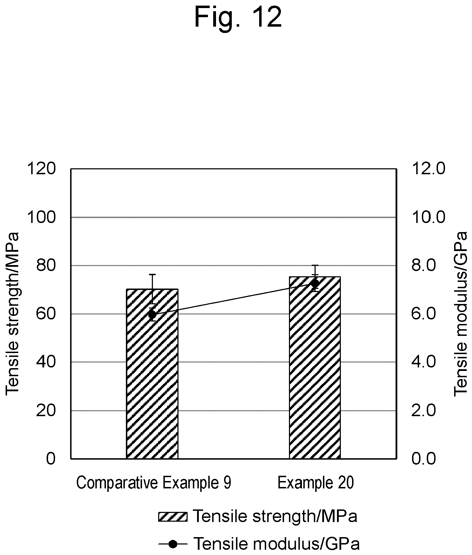

Table 12 and Figure 12 show the results of tensile tests of Examples 20 and Comparative Example 9.

### [Table 12]

**Table 12**

| | Comparative Example 9 | Example 20 |
|---|---|---|
| Tensile strength /MPa | 70.2 | 75.4 |
| Standard deviation /σ | 6.1 | 4.8 |
| Tensile modulus /GPa | 5.97 | 7.27 |
| Standard deviation /σ | 0.27 | 0.35 |
| Strain /% | 1.9 | 1.2 |
| Standard deviation /σ | 0.5 | 0.1 |

Comparative Example 9 and Examples 20 confirmed improved strengths (reinforced mechanical physical properties) in the polysaccharide nanofiber-blended polysaccharide composition to be obtained even when xanthan gum was used as the polysaccharide (B) and water was used as the solvent (C) in the production method of the present embodiment when compared with the material free from a polysaccharide nanofiber (Comparative Example 9).

### [Example 21]

The operation was carried out in the same manner as Example 19, except that the tamarind seed gum was changed to guar gum.

### [Comparative Example 10]

The operation was carried out in the same manner as Comparative Example 8, except that the tamarind seed gum was changed to guar gum.

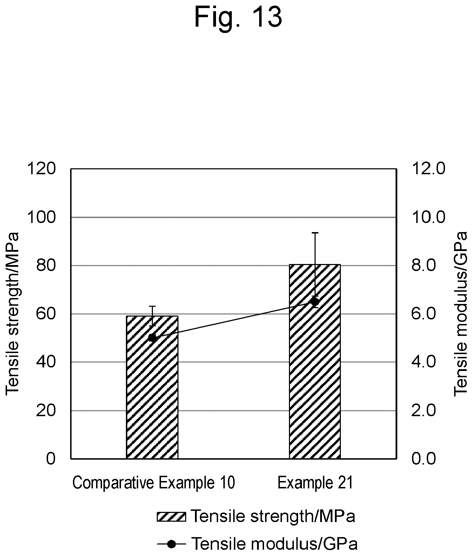

Table 13 and Figure 13 show the results of tensile tests of Examples 21 and Comparative Example 10.

### [Table 13]

**Table 13**

| | Comparative Example 10 | Example 21 |
|---|---|---|
| Tensile strength /MPa | 59.1 | 80.5 |
| Standard deviation /σ | 4.1 | 13.1 |
| Tensile modulus /GPa | 5.01 | 6.50 |
| Standard deviation /σ | 0.13 | 0.24 |
| Strain /% | 2.0 | 2.1 |
| Standard deviation /σ | 0.5 | 0.9 |

Comparative Example 10 and Example 21 confirmed improved strengths (reinforced mechanical physical properties) in the polysaccharide nanofiber-blended polysaccharide composition to be obtained even when guar gum was used as the polysaccharide (B) and water was used as the solvent (C) in the production method of the present embodiment when compared with the material free from a polysaccharide nanofiber (Comparative Example 10).

### [Example 22]

The operation was carried out in the same manner as Example 20, except that the tamarind seed gum was changed to cationized guar gum.

### [Comparative Example 11]

The operation was carried out in the same manner as Comparative Example 8, except that the tamarind seed gum was changed to cationized guar gum.

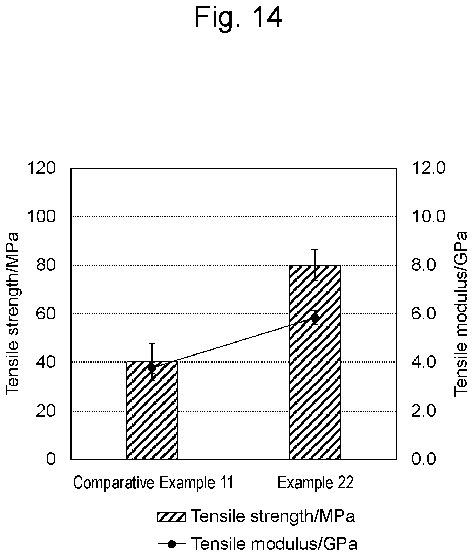

Table 14 and Figure 14 show the results of tensile tests of Examples 22 and Comparative Example 11.

### [Table 14]

**Table 14**

| | Comparative Example 11 | Example 22 |
|---|---|---|
| Tensile strength /MPa | 40.2 | 80.0 |
| Standard deviation /σ | 7.5 | 6.4 |
| Tensile modulus /GPa | 3.77 | 5.84 |
| Standard deviation /σ | 0.24 | 0.29 |
| Strain /% | 1.6 | 3.1 |
| Standard deviation /σ | 0.3 | 1.0 |

Comparative Example 11 and Examples 22 confirmed improved strengths (reinforced mechanical physical properties) in the polysaccharide nanofiber-blended polysaccharide composition to be obtained even when cationized guar gum was used as the polysaccharide (B) and water was used as the solvent (C) in the production method of the present embodiment when compared with the material free from a polysaccharide nanofiber (Comparative Example 11).

### [Example 23]

### <Preparation of a cellulose acetate solution in which BCNF is dispersed (mixture)>

250 mL of acetone was added to 50 g of the CM-BCNF sol, stirred until homogeneously dispersed, and then 4.5 g of CA (plasticizer content of 37 wt%) was added, followed by stirring until CA was completely dissolved, thereby obtaining a mixture.

### <Drying of the mixture>

The mixture was poured into a stainless steel tray, the stainless steel tray was set in a vacuum dryer and dried over a period of 15 hours under the condition of room temperature (20 to 25°C) and -60 kPa (gauge pressure), thereby obtaining a dry mixture (cast film) (total amount of CM and BCNF was 10 wt%).

### <Adjustment of BCNF concentration in the dried product>

The dry mixture was kneaded, thereby obtaining a mixed pellet comprising the total amount of CM and BCNF of 10 wt%. 1.2 g of the pellet and 2.8 of CA were further kneaded, thereby obtaining a pellet comprising the total amount of CM and BCNF of 3 wt%.

### <Melt spinning>

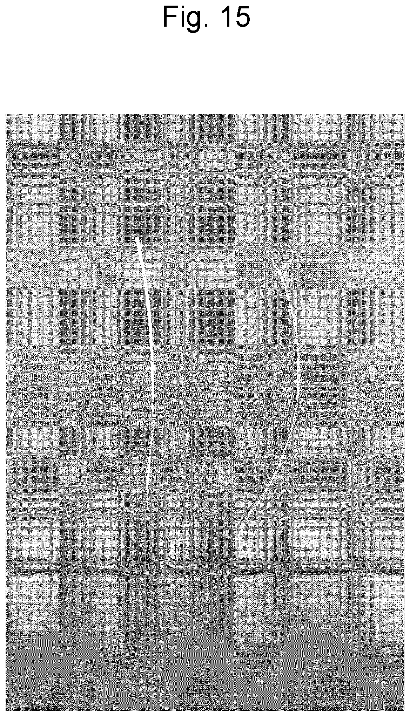

A die having a pore size of φ700 µm was mounted to a melt spinning machine (manufactured by Imoto machinery Co., LTD: IMC-6721 Type), 8 g of the pellet comprising the total amount of CM and BCNF of 3 wt% was fed and melt spun under the condition of 180 to 190°C and a hydraulic cylinder of 2 MPa (gauge pressure), thereby obtaining a filament (Figure 15, left).

### <Tensile test>

The tensile test was carried out on the prepared filament using a tensile tester (manufactured by Shimadzu Corporation, EZ-SX 200N) at a rate of 5 mm/min.

### [Comparative Example 12]

A die having a pore size of φ700 µm was mounted to a melt spinning machine as in Example 23, 8 g of the pellet comprising CA (comprising 37 wt% of a plasticizer) was fed and melt spun under the condition of 180 to 190°C and a gauge pressure of 2 MPa, thereby obtaining a filament (Figure 15, right).

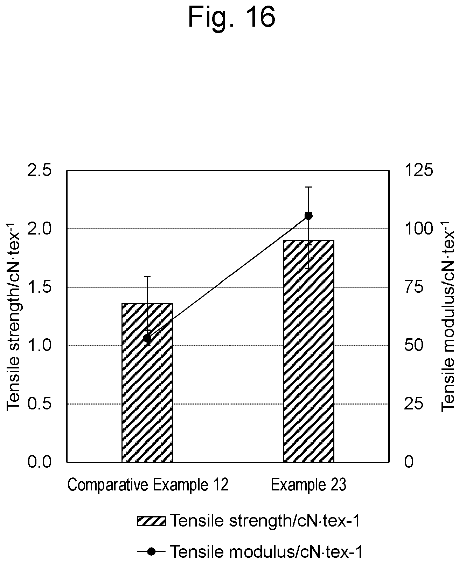

Table 15 and Figure 16 show the results of tensile tests of Example 23 and Comparative Example 12.

### [Table 15]

**Table 15**

| | Comparative Example 12 | Example 23 |
|---|---|---|
| Tensile strength /cN·tex⁻¹ | 1.36 | 1.90 |
| Standard deviation /σ | 0.23 | 0.24 |
| Tensile modulus /cN-tex⁻¹ | 53.1 | 105.5 |
| Standard deviation /σ | 3.1 | 12.4 |
| Strain /% | 66.3 | 21.8 |
| Standard deviation /σ | 20.8 | 3.5 |

Comparative Example 12 and Examples 23 confirmed improved strengths (reinforced mechanical physical properties) in the polysaccharide nanofiber-blended polysaccharide composition obtained by the production method of the present embodiment irrelevant to the shape when compared with the material free from a polysaccharide nanofiber (Comparative Example 12).

### [Example 24]

### <Preparation of a polysaccharide solution in which BCNF is dispersed>

90 g of water was added to 4.5 g of the HP starch, heated at 90°C for 1.5 hours to dissolve the HP starch. 50 g of the CM-BCNF sol was added thereto, stirred until homogeneously dispersed, thereby obtaining a mixture (HP starch: total amount of CM and BCNF (mass ratio) = 90:10).

### <Defoaming treatment of the mixture>

The mixture was poured into a stainless steel tray and allowed to stand in a vacuum dryer to defoam for 3 to 5 minutes while allowing air to circulate at 70°C and -80 kPa (gauge pressure).

### <Preparation of a molded article>

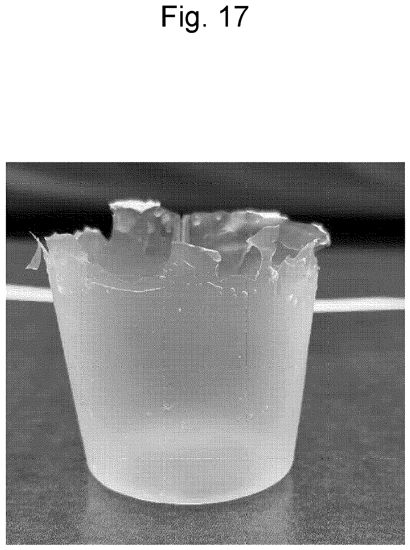

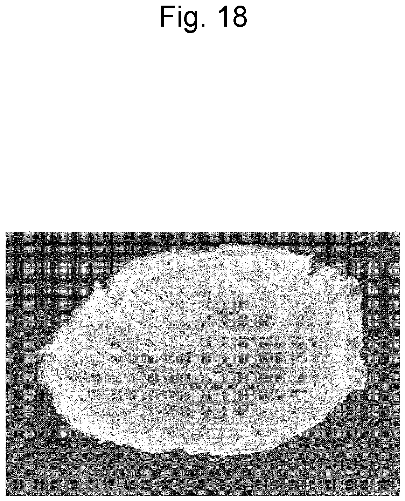

A cup to be a mold for a molded article was immersed in a dispersion of the mixture, moisture was drained to prevent dripping, and the cup was allowed to stand in a vacuum dryer and dried at 70°C and -80 kPa (gauge pressure). This operation was repeated 8 times, thereby obtaining a cup-shaped molded article composed of the laminated mixture (Figure 17). The shape of the molded article was changed to a plate, thereby obtaining a plate-shaped molded article in the same technique (Figure 18). It should be noted that a molded article can also be produced by applying the mixture using a brush or the like instead of immersing in the dispersion.

### [Comparative Example 13]

### <Melt spinning>

A die having a pore size of φ700 µm was mounted to a melt spinning machine (manufactured by Imoto machinery Co., LTD: IMC-6721 Type), 15 to 20 g of the pellet comprising CA (comprising 37 wt% of a plasticizer) was fed, the resin was warmed at a spinning temperature (170°C, 175°C, 180°C, 185°C, or 190°C) for 15 to 20 min and then melt spun under the condition of a hydraulic cylinder of 2 MPa (gauge pressure), thereby obtaining a filament.

### <Tensile test>

A tensile test was carried out on the prepared filament using a tensile tester (manufactured by Shimadzu Corporation, EZ-SX 200N) at a rate of 5 mm/min.

Table 16 shows the spinning temperatures of the prepared filaments, the average fiber diameters of the spun filaments, and the results of tensile tests.

### [Table 16]

**Table 16**

| Spinning temperature / °C | Average fiber diameter / µm | Tensile strength / cN·tex⁻¹ | Tensile modulus / cN·tex⁻¹ | Strain / % |
|---|---|---|---|---|
| 170 | 866 | 1.06±0.06 | 49.2±2.1 | 49.0±9.2 |
| 175 | 845 | 1.10±0.08 | 50.1±3.5 | 53.9±10.9 |
| 180 | 828 | 1.20±0.12 | 54.5±3.6 | 49.1±11.2 |
| 185 | 812 | 1.36±0.23 | 53.1±3.1 | 67.3±20.1 |
| 190 | 672 | 1.39±0.07 | 67.7±4.5 | 69.6±8.2 |

Comparative Example 13 suggested that the average fiber diameter approached to a spinneret pore size of 700 µm as a spinning temperature increased, thereby improving mechanical strengths.

### [Example 25]

### <Preparation of a cellulose acetate solution in which BCNF is dispersed (mixture)>

250 mL of acetone was added to 15 g of the HP-BCNF sol (total amount of HP and BCNF was 0.15 g), stirred until homogeneously dispersed, and then 4.85 g of CA was added, followed by stirring until CA was completely dissolved, thereby obtaining a mixture.

### <Drying of the mixture>

The mixture was poured into a stainless steel tray, the stainless steel tray was set in a vacuum dryer and dried for a whole day under the condition of 50°C and -60 kPa (gauge pressure), thereby obtaining a dry mixture (cast film) (total amount of HP and BCNF was 3 wt%).

### <Kneading>

The cast film was finely crushed and then kneaded using a melt kneader (manufactured by DSM, Xplore MC5) for 5 to 10 minutes under condition of 170 to 200°C at a screw-rotation speed of 60 rpm. The strand obtained by kneading was cut, thereby obtaining pellets (BCNF-containing cellulose acetate pellet).

### <Melt spinning>

A die having a pore size of φ700 µm was mounted to a melt spinning machine (manufactured by Imoto machinery Co., LTD: IMC-6721 Type), 15 to 20 g of the pellet comprising the total amount of HP and BCNF of 3 wt% was fed, the resin was warmed at a spinning temperature (170°C, 175°C, 180°C, 185°C, or 190°C) for 15 to 20 min and then melt spun under the condition of a hydraulic cylinder of 2 MPa (gauge pressure), thereby obtaining a filament.

### <Tensile test>

A tensile test was carried out on the prepared filament using a tensile tester (manufactured by Shimadzu Corporation, EZ-SX 200N) at a rate of 5 mm/min.

Table 17 shows the water-soluble solvents used, the ratios of water to water-soluble solvent, the spinning temperatures of the prepared filaments, the average fiber diameters of the spun filaments, and the results of tensile tests.

### [Example 26]

### <Preparation of a cellulose acetate solution in which BCNF is dispersed (mixture)>

1,4-Dioxane was added to 15 g of the HP-BCNF sol (total amount of HP and BCNF was 0.15 g) so that the following amounts were achieved, stirred until homogeneously dispersed, and then 4.85 g of CA was added, followed by stirring until CA was completely dissolved, thereby obtaining a mixture.
Water : 1,4-dioxane = 5:5 (mol/mol) (1,4-dioxane 70.4 ml (72.7 g))
Water : 1,4-dioxane = 4:6 (mol/mol) (1,4-dioxane 105.6 ml (109.0 g))
Water : 1,4-dioxane = 3:7 (mol/mol) (1,4-dioxane 164.2 mL (169.6 g))

### <Drying of the mixture>

The mixture was poured into a stainless steel tray, the stainless steel tray was set in a vacuum dryer and dried for a whole day under the condition of 50°C and -60 kPa (gauge pressure), thereby obtaining a dry mixture (cast film) (total amount of HP and BCNF was 3 wt%).

### <Kneading>

The cast film was finely crushed and then kneaded using a melt kneader (manufactured by DSM, Xplore MC5) for 5 to 10 minutes under condition of 170 to 200°C at a screw-rotation speed of 60 rpm. The strand obtained by kneading was cut, thereby obtaining pellets (BCNF-containing cellulose acetate pellet).

### <Melt spinning>

A die having a pore size of φ700 µm was mounted to a melt spinning machine (manufactured by Imoto machinery Co., LTD: IMC-6721 Type), 15 to 20 g of the pellet comprising the total amount of HP and BCNF of 3 wt% was fed, the resin was warmed at a spinning temperature (180°C, 190°C, or 200°C) for 15 to 20 min and then melt spun under the condition of a hydraulic cylinder of 2 MPa (gauge pressure), thereby obtaining a filament.

### <Tensile test>

A tensile test was carried out on the prepared filament using a tensile tester (manufactured by Shimadzu Corporation, EZ-SX 200N) at a rate of 5 mm/min.

Table 17 shows the water-soluble solvents used, the ratios of water to water-soluble solvent, the spinning temperatures of the prepared filaments, the average fiber diameters of the spun filaments, and the results of tensile tests.

### [Table 17]

**Table 17**

| Water-soluble solvent | Water: Water-soluble solvent / mol:mol | Spinning temperature / °C | Average fiber diameter / µm | Tensile strength / cN·tex⁻¹ | Tensile modulus / cN·tex⁻¹ | Strain / % |
|---|---|---|---|---|---|---|
| Acetone | 1:5 | 170 | 863 | 1.44±0.13 | 79.2±4.7 | 32.7±5.8 |
| Acetone | 1 : 5 | 175 | 739 | 1.93±017 | 111.4±6.1 | 20.4±6.3 |
| Acetone | 1 : 5 | 180 | 770 | 1.59±0.11 | 92.3±7.3 | 25.4±6.9 |
| Acetone | 1 : 5 | 185 | 731 | 2.02±0.20 | 115.7±18.2 | 22.0±5.1 |
| Acetone | 1 : 5 | 190 | 710 | 2.11±0.11 | 126.8±7.3 | 21.4±2.4 |
| 1,4-Dioxane | 5 : 5 | 180 | 935 | 1.50±0.07 | 81.7±2.6 | 26.0±6.9 |
| 1,4-Dioxane | 5 : 5 | 190 | 822 | 1.69±0.10 | 91.8±5.5 | 26.3±3.1 |
| 1,4-Dioxane | 5 : 5 | 200 | 743 | 1.90±0.09 | 116.9±5.4 | 17.0±1.3 |
| 1,4-Dioxane | 4 : 6 | 180 | 900 | 1.47±0.06 | 83.4±3.8 | 34.0±4.6 |
| 1,4-Dioxane | 4 : 6 | 190 | 743 | 2.11±0.22 | 134.7±10.5 | 14.7±7.6 |
| 1,4-Dioxane | 4 : 6 | 200 | 686 | 2.38±0.19 | 144.2±11.1 | 15.9±3.6 |
| 1,4-Dioxane | 3 : 7 | 180 | 1093 | 1.50±0.11 | 77.4±5.4 | 20.3±10.9 |
| 1,4-Dioxane | 3 : 7 | 190 | 895 | 1.71±0.09 | 92.1±3.7 | 26.9±8.7 |
| 1,4-Dioxane | 3 : 7 | 200 | 752 | 2.01±0.12 | 117.4±7.1 | 19.6±3.7 |

Examples 25 and 26 similarly suggested that the average fiber diameters approached to a spinneret pore size of 700 µm as spinning temperatures increased, thereby improving mechanical strengths. Improved mechanical strength were confirmed by the addition of HP-BCNF when compared with Comparative Example 13. Additionally, Example 26 revealed particularly excellent strength in water : 1,4-dioxane = 4:6 (molar ratio) when 1.4-dioxane was used as the water-soluble solvent.

### [Example 27]

### <Preparation of a cellulose acetate solution in which BCNF is dispersed (mixture)>

250 mL of acetone was added to 15 g of the CM-BCNF sol (total amount of CM and BCNF was 0.15 g), stirred until homogeneously dispersed, and then 4.85 g of CA was added, followed by stirring until CA was completely dissolved, thereby obtaining a mixture.

### <Drying of the mixture>

The mixture was poured into a stainless steel tray, the stainless steel tray was set in a vacuum dryer and dried for a whole day under the condition of 50°C and -60 kPa (gauge pressure), thereby obtaining a dry mixture (cast film) (total amount of CM and BCNF was 3 wt%).

### <Kneading>

The cast film was finely crushed and then kneaded using a melt kneader (manufactured by DSM, Xplore MC5) for 5 to 10 minutes under condition of 170 to 200°C at a screw-rotation speed of 60 rpm. The strand obtained by kneading was cut, thereby obtaining pellets (BCNF-containing cellulose acetate pellet).

### <Melt spinning>

A die having a pore size of φ700 µm was mounted to a melt spinning machine (manufactured by Imoto machinery Co., LTD: IMC-6721 Type), 15 to 20 g of the pellet comprising the total amount of CM and BCNF of 3 wt% was fed, the resin was warmed at a spinning temperature (170°C, 175°C, 180°C, 185°C, or 190°C) for 15 to 20 min and then melt spun under the condition of a hydraulic cylinder of 2 MPa (gauge pressure), thereby obtaining a filament.

### <Tensile test>

A tensile test was carried out on the prepared filament using a tensile tester (manufactured by Shimadzu Corporation, EZ-SX 200N) at a rate of 5 mm/min.

Table 18 shows the water-soluble solvents used, the ratios of water to water-soluble solvent, the spinning temperatures of the prepared filaments, the average fiber diameters of the spun filaments, and the results of tensile tests.

### [Example 28]

### <Preparation of a cellulose acetate solution in which BCNF is dispersed (mixture)>

1,4-Dioxane was added to 15 g of the CM-BCNF sol (total amount of CM and BCNF was 0.15 g) so that the following amounts were achieved, stirred until homogeneously dispersed, and then 4.85 g of CA was added, followed by stirring until CA was completely dissolved, thereby obtaining a mixture.
Water : 1,4-dioxane = 5:5 (mol/mol) (1,4-dioxane 70. ml
   (72.7 g))
Water : 1,4-dioxane = 4:6 (mol/mol) (1,4-dioxane 105.6 ml (109.0 g))
Water : 1,4-dioxane = 3:7 (mol/mol) (1,4-dioxane 164.2 mL (169.6 g))

### <Drying of the mixture>

The mixture was poured into a stainless steel tray, the stainless steel tray was set in a vacuum dryer and dried for a whole day under the condition of 50°C and -60 kPa (gauge pressure), thereby obtaining a dry mixture (cast film) (total amount of CM and BCNF was 3 wt%).

### <Kneading>

The cast film was finely crushed and then kneaded using a melt kneader (manufactured by DSM, Xplore MC5) for 5 to 10 minutes under condition of 170 to 200°C at a screw-rotation speed of 60 rpm. The strand obtained by kneading was cut, thereby obtaining pellets (BCNF-containing cellulose acetate pellet).

### <Melt spinning>

A die having a pore size of φ700 µm was mounted to a melt spinning machine (manufactured by Imoto machinery Co., LTD: IMC-6721 Type), 15 to 20 g of the pellet comprising the total amount of CM and BCNF of 3 wt% was fed, the resin was warmed at a spinning temperature (180°C, 190°C, or 200°C) for 15 to 20 min and then melt spun under the condition of a hydraulic cylinder of 2 MPa (gauge pressure), thereby obtaining a filament.

### <Tensile test>

A tensile test was carried out on the prepared filament using a tensile tester (manufactured by Shimadzu Corporation, EZ-SX 200N) at a rate of 5 mm/min.

Table 18 shows the water-soluble solvents used, the ratios of water to water-soluble solvent, the spinning temperatures of the prepared filaments, the average fiber diameters of the spun filaments, and the results of tensile tests.

### [Table 18]

**Table 18**

| Water-soluble solvent | Water:Water-soluble solvent / mol:mol | Spinning temperature / °C | Average fiber diameter / µm | Tensile strength / cN·tex⁻¹ | Tensile modulus / cN·tex⁻¹ | Strain / % |
|---|---|---|---|---|---|---|
| Acetone | 1 : 5 | 170 | 1131 | 1.33±0.10 | 75.7±3.6 | 31.8±8.2 |
| Acetone | 1 : 5 | 175 | 899 | 1.44±0.06 | 86.7±6.8 | 22.5±6.7 |
| Acetone | 1 : 5 | 180 | 859 | 1.43±0.09 | 85.1±6.2 | 24.3±5.0 |
| Acetone | 1 : 5 | 185 | 730 | 2.00±0.13 | 118.6±6.2 | 21.2±2.6 |
| Acetone | 1 : 5 | 190 | 709 | 2.12±0.22 | 138.2±10.9 | 15.5±4.2 |
| 1,4-Dioxane | 5 : 5 | 180 | 1060 | 1.58±0.15 | 86.1±10.4 | 23.9±3.7 |
| 1,4-Dioxane | 5 : 5 | 190 | 722 | 2.15±0.15 | 122.0±2.9 | 23.1±4.3 |
| 1,4-Dioxane | 5 : 5 | 200 | 704 | 2.33±0.17 | 134.1±7.8 | 18.3±5.1 |
| 1,4-Dioxane | 4 : 6 | 180 | 949 | 1.60±0.15 | 97.3±6.0 | 19.2±4.0 |
| 1,4-Dioxane | 4 : 6 | 190 | 709 | 2.18±0.24 | 139.7±9.1 | 13.8±2.6 |
| 1,4-Dioxane | 4 : 6 | 200 | 685 | 2.31±0.18 | 143.0±6.8 | 14.7±2.3 |
| 1,4-Dioxane | 3 : 7 | 180 | 911 | 1.72±0.08 | 101.8±6.8 | 24.2±3.9 |
| 1,4-Dioxane | 3 : 7 | 190 | 750 | 2.12±0.21 | 129.1±14.3 | 13.3±4.9 |
| 1,4-Dioxane | 3 : 7 | 200 | 702 | 2.37±0.15 | 142.6±4.3 | 17.6±2.5 |

Examples 27 and 28 similarly suggested that the average fiber diameters approached to a spinneret pore size of 700 µm as spinning temperatures increased, thereby improving mechanical strengths. Improved mechanical strength were confirmed by the addition of CM-BCNF when compared with Comparative Example 13.

### [Example 29, Comparative Example 14]

### <Preparation of a tamarind seed gum aqueous solution in which BCNF is dispersed (mixture)>

Distilled water was added to the HP-BCNF sol, stirred until homogeneously dispersed, and then glycerin was added, and tamarind seed gum was added, followed by stirring until tamarind seed gum was completely dissolved, thereby obtaining a mixture. Table 19 shows a weight of each raw material used.

### [Table 19]

**Table 19**

| Sample No. | HP-BCNF Sol /g | Distilled water /g | Glycerin /g | Tamarind seed gum /g | Proportion in polysaccharide composition | | |
|---|---|---|---|---|---|---|---|
| | | | | | Tamarind seed gum /wt% | HP-BCNF /wt% | Glycerin /wt% |
| 1 | 0 | 90 | 0 | 1.0 | 100 | 0 | 0 |
| 2 | 10 | 80 | 0 | 0.9 | 90 | 10 | 0 |
| 3 | 30 | 40 | 0 | 0.7 | 70 | 30 | 0 |
| 4 | 0 | 90 | 0.3 | 0.6 | 67 | 0 | 33 |
| 5 | 0 | 50 | 0.5 | 0.5 | 50 | 0 | 50 |
| 6 | 10 | 50 | 0.3 | 0.6 | 60 | 10 | 30 |
| 7 | 10 | 35 | 0.45 | 0.45 | 45 | 10 | 45 |
| 8 | 27 | 36 | 0.21 | 0.42 | 47 | 30 | 23 |
| 9 | 30 | 40 | 0.35 | 0.35 | 35 | 30 | 35 |

Samples 1, 4 and 5 in which the HP-BCNF sol was not used are equivalent to Comparative Examples, and other samples are equivalent to Examples.

### <Degassing of the solution>

Each mixture was set in a vacuum dryer and dried for 30 seconds to one minute and 30 seconds under the condition of 70°C and -90 kPa or less (gauge pressure), thereby degassing the solution.

### <Drying of the mixture>

The mixture was poured into a polypropylene tray, the tray was set in a vacuum dryer and dried for a whole day under the condition of 50°C and -5 kPa (gauge pressure), thereby obtaining a dry mixture (cast film).

### <Tensile test specimen preparation>

The prepared film was punched to a dumbbell specimen (Figure 1) (in conformity with JIS K7139) using a punching machine (manufactured by Imoto machinery Co., LTD, IMC-1948-B Type).

The tensile test was carried out using the prepared dumbbell specimen by the same method as Example 1.

### <Water contact angle test>

The prepared film was placed on a preparation, a contact angle meter (manufactured by Excimer, Inc.: SImage Entry 6) was set, 5 µL of a water droplet at the syringe needle tip was added dropwise onto the film, and evaluation was made by the ATANθ/2 method (in conformity with JIS R3265).

### <Oil contact angle test>

Evaluation was made by the same procedure as the water contact angle test, except that 5 µL of a water droplet was changed to 5 µL of a canola oil droplet.

Table 19 shows the results of tensile test and the results of contact angle tests.

### [Table 20]

**Table 20**

| Sample No. | Mechanical strengths | | | Contact angle test | |
|---|---|---|---|---|---|
| | Tensile strength / MPa | Tensile modulus / GPa | Strain / % | Water contact angle / ° | Oil contact angle / ° |
| 1 | 88.7±12.6 | 6.93±0.20 | 3.9±1.9 | 65.6 | 17.3 |
| 2 | 86.3±15.0 | 6.98±0.60 | 2.3±0.2 | 107.7 | 33.2 |
| 3 | 145.3±20.9 | 11.35±0.74 | 2.2±0.6 | 107.6 | 36.6 |
| 4 | 16.6±2.9 | 0.71±0.08 | 23.1±4.3 | 55.0 | 19.3 |
| 5 | 11.7±2.0 | 0.10±0.09 | 54.7±10.9 | 37.5 | 27.4 |
| 6 | 37.1±2.1 | 1.61±0.14 | 11.2±0.5 | 104.3 | 35.2 |
| 7 | 31.1±1.2 | 0.54±0.05 | 19.7±1.4 | 118.6 | 32.2 |
| 8 | 70.9±4.1 | 3.23±0.24 | 7.3±0.6 | 117.7 | 46.3 |
| 9 | 48.5±3.1 | 1.64±0.06 | 9.1±0.8 | 116.4 | 43.2 |

Tables 19 and 20 confirmed improved mechanical strengths and improved water and oil contact angles by the addition of HP-BCNF. It was confirmed the improved tensile, the decreased water contact angle and the improved oil contact angle by the addition of glycerin. The addition of HP-BCNF and glycerin enabled to obtain a molded article with excellent tensile and improved water and oil contact angles while maintaining mechanical strengths.

The studies regarding Examples 25 to 29 and Comparative Examples 13 and 14 are grant-aided based on "the Program on Open Innovation Platforms for Industry-academia Co-creation (COI-NEXT)" of National Research and Development, Japan Science and Technology Agency (JST).

The upper limit values and/or the lower limit values of the numerical value ranges described in the present description can be in any combinations to define a preferable range. For example, an upper limit value and a lower limit value of a numerical value range can be in any combination to define a preferable range, upper limit values of a numerical value range can be in any combination to define a preferable range, or lower limit values of a numerical value range can be in any combination to define a preferable range.

Hereinabove, the present embodiment has been described in detail; however, specific configuration is not limited to this embodiment, and design modifications without departing from the scope of the present disclosure shall be encompassed by the present disclosure.

All of the literatures, patents and patent applications cited herein are deemed to be incorporated *per se* by reference into the present description.

## Claims

1. A method for producing a polysaccharide nanofiber-blended polysaccharide composition, comprising:
a step of mixing
a sol comprising a polysaccharide nanofiber (A),
a polysaccharide (B), and
a solvent (C) capable of dissolving the polysaccharide (B)
to obtain a mixture, and
a step of drying the mixture to obtain a dry mixture.

2. The method for producing a polysaccharide nanofiber-blended polysaccharide composition according to claim 1, wherein the polysaccharide nanofiber (A) is at least one polysaccharide nanofiber selected from the group consisting of bacterial cellulose nanofibers, plant-based cellulose nanofibers, chitosan nanofibers, and chitin nanofibers.

3. The method for producing a polysaccharide nanofiber-blended polysaccharide composition according to claim 1 or 2, wherein the polysaccharide (B) is at least one polysaccharide selected from the group consisting of cellulose derivatives, chitosan, chitin, starch, starch derivatives, tamarind gum, xanthan gum, guar gum, guar gum derivatives, and gellan gum.

4. The method for producing a polysaccharide nanofiber-blended polysaccharide composition according to any one of claims 1 to 3, wherein the solvent (C) is at least one solvent selected from the group consisting of water and water-soluble solvents.

5. The method for producing a polysaccharide nanofiber-blended polysaccharide composition according to any one of claims 1 to 4, comprising 0.1 to 60 mass% of the polysaccharide nanofiber (A) in 100 mass% of the polysaccharide nanofiber-blended polysaccharide composition.

6. The method for producing a polysaccharide nanofiber-blended polysaccharide composition according to any one of claims 1 to 5, wherein the sol comprising a polysaccharide nanofiber (A) comprises a water-soluble cellulose.

7. A molded article comprising a polysaccharide nanofiber-blended polysaccharide composition obtained by the production method according to any one of claims 1 to 6.

8. The molded article according to claim 7, which is in a shape of a film, pellet, powder, plate, filament, or container.
